# EUROPEAN PATENT APPLICATION

(11) **EP 2 733 935 A1**
(43) Date of publication of application: **21.05.2014**
(21) Application number: 12810986.5
(22) Date of filing: 11.07.2012
(51) Int. Cl.: H04N 7/173

(54) **GENERATION DEVICE, DISTRIBUTION SERVER, GENERATION METHOD, PLAYBACK DEVICE, PLAYBACK METHOD, PLAYBACK SYSTEM, GENERATION PROGRAM, PLAYBACK PROGRAM, RECORDING MEDIUM AND DATA STRUCTURE**

(30) Priority: 12.07.2011 JP 2011154349
(71) Applicant: Sharp Kabushiki Kaisha, Osaka-shi, Osaka 545-8522 (JP)
(72) Inventor: TAKAHASHI, Maki, Osaka-shi, Osaka 545-8522 (JP); WATANABE, Shuhichi, Osaka-shi, Osaka 545-8522 (JP); OGISAWA, Yoshiaki, Osaka-shi, Osaka 545-8522 (JP); TOKUMO, Yasuaki, Osaka-shi, Osaka 545-8522 (JP)
(74) Representative: Müller - Hoffmann & Partner
(86) International application number: PCT/JP2012/067754
(87) International publication number: WO 2013/008866

(57) **Abstract**

A distribution server (300) periodically distributes, during a live distribution of a content, MPDs of the contents to a client device (100). The distribution server (300) includes a metadata generating section (320) for generating an XML file containing URLs of media segments (MS) belonging to past Periods. The metadata generating section (320) also generates MPDs.

## Description

### Technical Field

The present invention relates to (i) a reproducing device for reproducing content data obtained from a distribution server and (ii) a reproducing method for reproducing the content data. The present invention further relates to (i) a generating device for generating metadata to which the reproducing device refers so as to reproduce content data and (ii) a generating method for generating the metadata. The present invention further relates to a reproducing system including the generating device and the reproducing device. The present invention further relates to (i) a reproducing program and a generating program for causing a computer to operate as respective of the reproducing device and the generating device and (ii) a storage medium for storing the reproducing program and the generating program. The present invention further relates to a data structure of metadata, to which the reproducing device refers so as to reproduce content data.

### Background Art

In recent years, in accordance with rapid increase in demand for the Internet, there are growing numbers of users who watch video contents on the Internet, in addition to WEB pages configured by contents such as texts and still images.

Under the circumstances, various kinds of techniques (e.g., a technique of Non Patent Literature 1) have been developed, which relate to streaming distribution of video contents. One of such techniques is called "DASH (Dynamic Adaptive Streaming over HTTP)", which is currently in standardization work in MPEG (Moving Picture Experts Group).

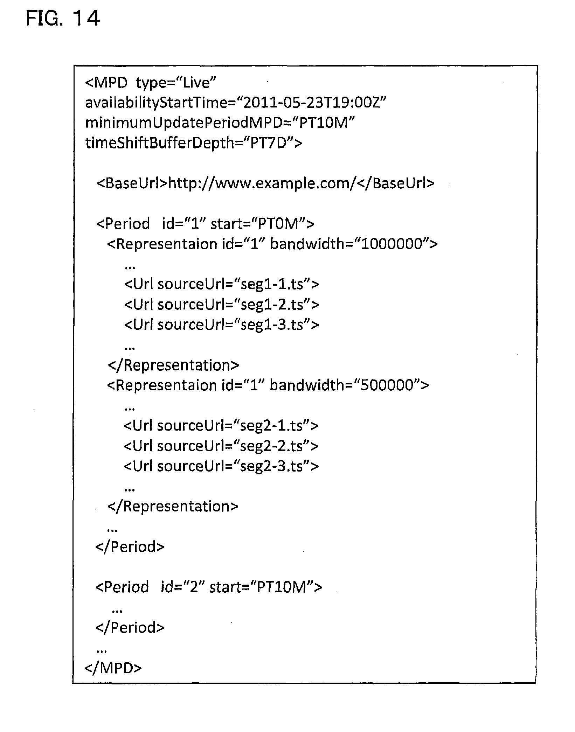

DASH defines (i) a format of MPD (Media Presentation Description) data as exemplified in Fig. 14 and (ii) a format of a media segment, which is exemplified as a ts file in the MPD data illustrated in Fig. 14. The media segment is an HTTP transmission unit, which is obtained by subjecting a video content to time division. The MPD data (i) is metadata for controlling a streaming distribution and (ii) contains information (i.e., an attribute value of an attribute "type" in Fig. 14) which is indicative of whether the video content is a content (live content) to be live distributed or a VOD content.

The MPD data contains (i) information (i.e., an attribute value of an attribute "start" in Fig. 14) indicative of a start time of a partial period (hereinafter, referred to as "Period") obtained by dividing a reproduction period of the video content, where a distribution start time of the video content is set to be a reference value "0" and (ii) information (i.e., an element value of an element "BaseURL" and an attribute value of an attribute "sourceURL" in Fig. 14) indicative of URLs of respective media segments belonging to the Period. In a case where the video content is a live content (i.e., an attribute value of the attribute "type" is "Live"), the MPD data contains information (an attribute value of an attribute "availabilityStartTime" in Fig. 14) indicative of a time point at which a distribution server starts the streaming distribution of the video content.

A client device obtains MPD data from a distribution server before obtaining a video content. The client device can reproduce the video content by sequentially obtaining media segments, based on URLs of the respective media segments which URLs are described in the MPD data. According to the technique of Non Patent Literature 1, it is impossible to carry out a trick reproduction. On the other hand, a client device conforming to DASH can carry out a time shift reproduction or a trick reproduction such as a fast-forward, because MPD data contain information relating to all obtainable media segments.

There are two types of live contents, that is, (i) a first live content (such as a music program) whose distribution end time is fixed before the first live content itself is distributed and (ii) a second live content (such as a live broadcast of a night game of professional baseball or a news program broadcasted when a disaster occurs) whose distribution end time is not fixed even after the second live content itself is distributed.

In a case where the distribution server distributes the first live content, the distribution server can deliver, to the client device, MPD data containing URLs of all media segments constituting the first live content, because a distribution end time (i.e., all Periods) is fixed in advance. This allows the client device to reproduce the first live content to its end, merely by receiving once the MPD data before starting a reproduction of the first live content.

On the other hand, in a case where the distribution server distributes the second live content, the distribution server cannot (i) generate MPD data containing URLs of all media segments, which are to be ultimately distributed and (ii) deliver such MPD data to the client device, until the distribution end time is fixed. The client device therefore cannot reproduce the second live content to the end, based only on MPD data which has been received before the distribution end time is fixed.

According to a technique of Non Patent Literature 2, in a case where the second live content is distributed, a process called "MPD Update" is employed in which MPD data, which has been updated to a latest state, is periodically delivered from the distribution server to the client device so that the client device can reproduce the second live content to the end. Note that, as the "MPD Update" process, there exist two types of processing methods (i.e., "updating process 1" and "updating process 2") which differ from each other depending on whether or not to support a time shift reproduction or a trick reproduction such as a fast-forward.

### [Updating Process 1]

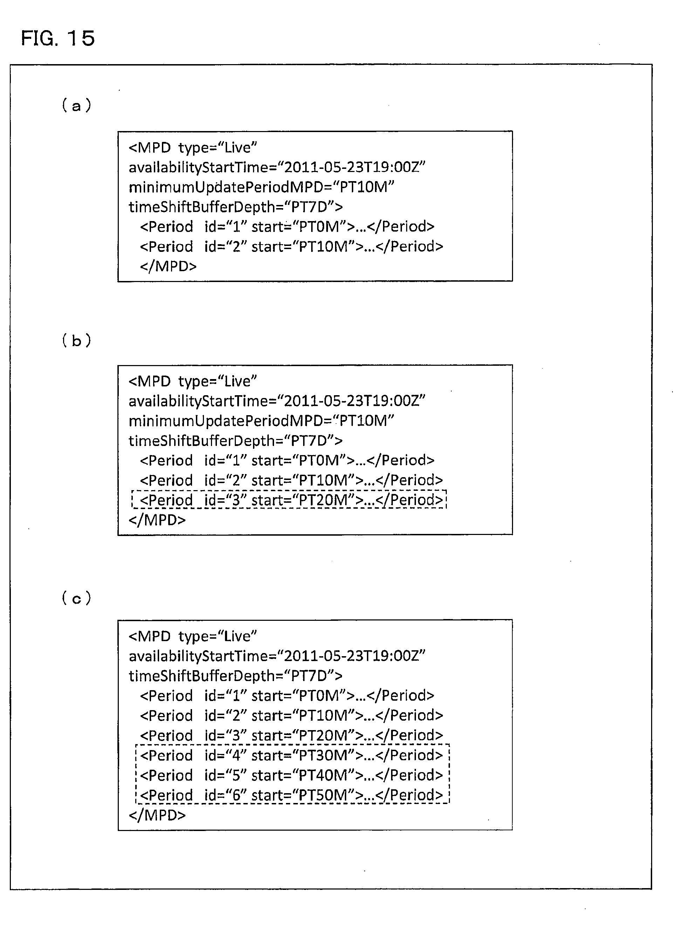

In the updating process 1, each time MPD data is updated, the distribution server adds information relating to a following Period to previous MPD data so as to periodically deriver latest MPD data, which has been updated to a latest state, to the client device. The following description will discuss, with reference to Fig. 15, a concrete example of such an updating process carried out by the distribution server.

Fig. 15 schematically illustrates an example of a part of MPD data, which is delivered from the distribution server to the client device. In Fig. 15, an attribute value of an attribute "minimumUpdatePeriodMPD" indicates a cycle in which the distribution server updates MPD data. The attribute value corresponds to a cycle in which the client device obtains MPD data from the distribution server. In the example illustrated in Fig. 15, the attribute value indicates "10 minutes". (a) of Fig. 15 illustrates initial MPD data at a distribution start time.

In the example illustrated in (a) of Fig. 15, the distribution server carries out, 10 minutes after the distribution start time, a first update by adding, to MPD data, a piece of information indicative of a following Period which is to start 20 minutes after the distribution start time. Subsequently, every 10 minutes, the distribution server adds a piece of information indicative of a following Period to the MPD data. (b) of Fig. 15 illustrates MPD data 10 minutes after the distribution start time. In (b) of Fig. 15, dotted part indicates added information relating to a following Period.

Meanwhile, the client device (i) obtains, during a reproduction of a live content, latest MPD data from the distribution server every 10 minutes, which is indicated by the attribute value of the attribute "minimumUpdatePeriodMPD" and (ii) continues the reproduction of the live content based on obtained MPD data.

Subsequently, the distribution server adds information relating to the rest of Periods at a time point when the distribution end time is fixed. (c) of Fig. 15 illustrates MPD data at a time point 40 minutes after the distribution start time, at which time point the distribution end time has been fixed. In (c) of Fig. 15, a dotted part indicates information relating to the reset of Periods which have been added. In eventually fixed MPD data, the attribute "minimumUpdatePeriodMPD" has been deleted (see (c) of Fig. 15).

The client device determines to end the periodical obtention of the MPD data, based on a fact that obtained MPD data does not contain the attribute "minimumUpdatePeriodMPD". The client device reproduces the live content to the end based on the eventually fixed MPD data. As is clear from (c) of Fig. 15, latest MPD data consistently contain information relating to the initial Period through a current Period to which a current time belongs. This allows the client device to carry out, at any time, a trick reproduction from a beginning of the live content.

### [Updating Process 2]

In the updating process 2, each time MPD data is updated, the distribution server (i) adds information relating to a following Period to previous MPD data and (ii) deletes information relating to an oldest Period. By the processes, the distribution server periodically deriver latest MPD data, which has been updated to a latest state, to the client device.

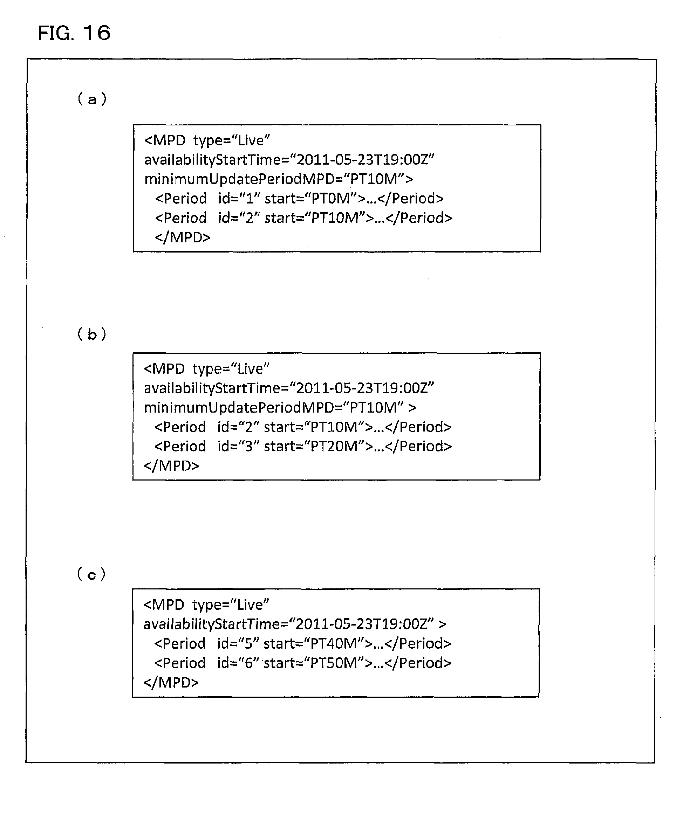

The following description will discuss, with reference to Fig. 16, a concrete example of the updating process 2 carried out by the distribution server.

Fig. 16 schematically illustrates an example of a part of MPD data, which is delivered, in the "MPD Update" process, from the distribution server to the client device. (a) of Fig. 16 illustrates initial MPD data at a distribution start time.

In the example illustrated in (a) of Fig. 16, the distribution server carries out, 10 minutes after the distribution start time, a first update by (i) adding, to MPD data, a piece of information indicative of a following Period which is to start 20 minutes after the distribution start time and (ii) deleting information relating to an oldest Period which starts at the distribution start time. (b) of Fig. 16 illustrates MPD data 10 minutes after the distribution start time. Subsequently, every 10 minutes, the distribution server (i) adds a piece of information indicative of a following Period to MPD data and (ii) deletes information of a Period which is oldest at the time. Then, the distribution server adds information relating to the rest of Periods at a time point 40 minutes after the distribution start time, at which time point the distribution end time has been fixed. (c) of Fig. 16 illustrates MPD data at a time point 40 minutes after the distribution start time.

In a case where the client device receives MPD data which has been updated by the updating process 2, the client device reproduces the live content in a manner similar to that of the case where the client device receives MPD data which has been updated by the updating process 1. As is clear from (c) of Fig. 16, latest MPD data, which has been updated by the updating process 2, consistently contains information of only a predetermined number of Periods. This allows the client device to receive MPD data which consistently has a substantially constant data amount.

### Citation List

### [Non Patent Literature]

[Non Patent Literature 1]
   "HTTP Live Streaming" (online), March, 2011 by Apple Inc., (Searched Date: June 3, 2011), URL on the Internet: < http://tools.ietf.org/html/draft-pantos-http-live-streaming-06>
[Non Patent Literature 2]
   "Information technology-MPEG systems technologies - Part 6: Dynamic Adaptive streaming over HTTP (DASH) " (online), January 28, 2011 by ISO/IEC, (Searched Date: June 3, 2011), URL on the Internet: <http: //www.itscj.ipsj.or.jp/sc29/open/29view/29n11873t.doc>

### Summary of Invention

### Technical Problem

In a case where the distribution server periodically delivers latest MPD data, which has been updated by the updating process 1, to the client device, the client device is to repeatedly receive information of Periods which has already been received. Note that, it seems that most of users, who are watching a live content streaming-distributed from the distribution server, never use a time shift reproduction function during watching the live content. Therefore, a large number of client devices, which do not carry out the time shift reproduction, are to receive MPD data having excessively large amounts of information for such client devices themselves.

Under the circumstances, it is not efficient to distribute MPD data which has been updated by the updating process 1.

On the other hand, in a case where the distribution server periodically delivers latest MPD data, which has been updated by the updating process 2, to the client device, information relating to a Period, which is oldest at the time, is deleted from MPD data every time the MPD data is updated. This causes a problem that the client device can carry out a time shift reproduction at a reproduction point only within a predetermined time range from current time to past time.

The present invention is accomplished in view of the problem, and its main object is to provide a generating device and a generating method which can generate MPD data (in a general sense, metadata for controlling a live distribution) which (i) enables a reproducing device to carry out a trick reproduction of a live content from an arbitrary reproduction point and (ii) achieves better distribution efficiency (i.e., has a smaller data amount) than a conventional technique.

Moreover, the object of the present invention is to further provide (i) a reproducing device and a reproducing method for reproducing a live content which is distributed based on the MPD data (metadata) generated by the generating device and (ii) a data structure of such MPD data (metadata).

### Solution to Problem

A generating device of the present invention is a generating device for repeatedly generating metadata during a live distribution of content data, the metadata (i) relating to the content data which is subjected to a live-distribution while being subjected to time-division to have a plurality of pieces of time-division data and (ii) containing meta information for specifying a location of a piece of time-division data to be obtained by a reproducing device which carries out a live reproduction, the generating device including: first generating means for generating first metadata containing first resource location specifiers indicative of locations of respective pieces of time-division data of which each of at least one time-division data group, distributed during a certain time period in the past, is made up; and second generating means for generating second metadata containing, as the meta information, (i) a second resource location specifier indicative of a location of first metadata containing first resource location specifiers indicative of locations of respective first pieces of time-division data, which were distributed during the certain time period in the past, out of the plurality of pieces of time-division data and (ii) a third resource location specifier indicative of a location of second time-division data out of the plurality of pieces of time-division data, which second time-division data is time-division data other than the first pieces of time-division data. Here, the second generating means can generate (i) second metadata by editing second metadata generated in the past or (ii) second metadata independent from such second metadata generated in the past.

According to the configuration, the second metadata generated by the generating device of the present invention contains a third resource location specifier indicative of a location of time-division data which is currently distributed. Moreover, the second metadata contains (i) third resource location specifiers indicative of locations of the respective plurality of pieces of time-division data distributed in the past or (ii) a second resource location specifier indicative of a location of first metadata containing first resource location specifiers indicative of the locations of the respective pieces of time-division data. Then, the reproducing device which has obtained the second metadata can specify a location of arbitrary time-division data which is currently distributed or was distributed in the past.

Therefore, the generating device of the present invention generates second metadata which allows the reproducing device, which is carrying out a live reproduction of a live content, to carry out a trick reproduction from an arbitrary time point.

In general, it is a matter of course that a data size of a second resource location specifier is smaller than a sum of data sizes of first resource location specifiers contained in first metadata whose location is specified by the second resource location specifier. Therefore, the data size of the second metadata becomes smaller than that of metadata generated by a conventional device, which metadata contains resource location specifiers of respective pieces of time-division data which are distributed currently or in the past. Moreover, in a case where a reproducing device of the present invention does not carry out a trick reproduction, the reproducing device does not obtain time-division data distributed in the past. Therefore, the reproducing device does not obtain first metadata in such a case.

According to the configuration, the reproducing device, which does not carry out a trick reproduction, can achieve data distribution efficiency better than that of the conventional device.

With the configuration, the generating device of the present invention can generate metadata which (i) relates to a content data live distributed, (ii) enables the reproducing device to carry out a trick reproduction of a live content from an arbitrary reproduction point, and (iii) achieves distribution efficiency better than that of a conventional technique.

A generating method of the present invention is a method for repeatedly generating metadata during a live distribution of content data, the metadata (i) relating to the content data which is subjected to a live-distribution while being subjected to time-division to have a plurality of pieces of time-division data and (ii) containing meta information for specifying a location of a piece of time-division data to be obtained by a reproducing device which carries out a live reproduction, the method including the steps of: generating first metadata containing first resource location specifiers indicative of locations of respective pieces of time-division data of which each of at least one time-division data group, distributed during a certain time period in the past, is made up; and generating second metadata containing, as the meta information, (i) a second resource location specifier indicative of a location of first metadata containing first resource location specifiers indicative of locations of respective first pieces of time-division data, which were distributed during the certain time period in the past, out of the plurality of pieces of time-division data and (ii) a third resource location specifier indicative of a location of second time-division data out of the plurality of pieces of time-division data, which second time-division data is time-division data other than the first pieces of time-division data.

According to the configuration, the generating method of the present invention brings about an effect similar to that of the generating device of the present invention.

In order to attain the object, a reproducing device of the present invention is a reproducing device for reproducing content data which is subjected to a live-distribution by a distribution server while being subjected to time-division to have a plurality of pieces of time-division data, the reproducing device including: first obtaining means for obtaining first metadata containing first resource location specifiers indicative of locations of respective pieces of time-division data of which each of at least one time-division data group, corresponding to a certain time period, is made up; second obtaining means for obtaining second metadata containing (i) a second resource location specifier indicative of a location of the first metadata and (ii) a third resource location specifier indicative of a location of a piece of time-division data whose location is not indicated by the first meta data; and reproducing means for (i) sequentially obtaining the plurality of pieces of time-division data from the distribution server based on the second metadata and (ii) reproducing obtained plurality of pieces of time-division data, in a case where the second metadata does not contain a resource location specifier indicative of a location of a piece of time-division data to be reproduced, the reproducing means obtaining first metadata based on a second resource location specifier.

According to the configuration, the first metadata and the second metadata obtained by the reproducing device of the present invention are identical with respective of the first metadata and the second metadata generated by the generating device of the present invention. Moreover, the reproducing device can obtain time-division data, which is to be obtained for reproduction at the time point at which the reproducing device accepts an instruction on live distribution, with reference to a third resource location specifier. Moreover, the reproducing device can obtain time-division data, which is to be obtained for reproduction at the time point at which the reproducing device accepts an instruction on trick reproduction, with reference to (i) a first resource location specifier and a second resource location specifier or (ii) a third resource location specifier.

Therefore, the reproducing device of the present invention can reproduce a live-distributed content based on metadata generated by the generating device of the present invention.

In order to attain the object, a reproducing device of the present invention is a reproducing device for reproducing content data which is subjected to a live-distribution by a distribution server while being subjected to time-division to have a plurality of pieces of time-division data, the reproducing device including: obtaining means for repeatedly obtaining metadata which contains resource location specifiers indicative of locations of only respective pieces of time-division data which (i) include at least pieces of time-division data to be obtained by the reproducing device so as to carry out a live reproduction of the content data and (ii) are distributed during a certain time period; generating means for generating new metadata from the metadata each time the obtaining means obtains the metadata; and reproducing means for (i) sequentially obtaining the only respective pieces of time-division data from the distribution server based on a latest piece of the new metadata generated by the generating means and (ii) reproducing the only respective pieces of time-division data thus obtained, the new metadata being metadata which contains all resource location specifiers contained in at least one of (i) the latest metadata generated by the generating means and (ii) the new metadata obtained by the obtaining means.

According to the configuration, the reproducing device of the present invention generates new metadata which contains all resource location specifiers contained in metadata obtained in the past.

Therefore, in a case where the reproducing device of the present invention starts reproducing of a content data from the distribution start time, the reproducing device generates metadata which contains all resource location specifiers indicative of locations of respective all pieces of time-division data, which includes time-division data currently distributed and pieces of time-division data distributed in the past. This makes it possible to carry out, based on the metadata, a live distribution of a live content and a trick reproduction from an arbitrary reproduction point.

The metadata, which is obtained by the reproducing device of the present invention, contains resource location specifiers indicative of locations of only respective pieces of time-division data which (i) include at least pieces of time-division data to be obtained by the reproducing device so as to carry out a live reproduction and (ii) are distributed during a certain time period.

Therefore, the reproducing device of the present invention can obtain metadata more efficiently than a conventional technique, which metadata is to be obtained for carrying out a live distribution of a live content and a trick reproduction from an arbitrary reproduction point.

In order to attain the object, a reproduction method of the present invention is a method for reproducing content data which is subjected to a live-distribution by a distribution server while being subjected to time-division to have a plurality of pieces of time-division data, the method including the steps of:
(a) repeatedly obtaining metadata which contains resource location specifiers indicative of locations of only respective pieces of time-division data which (i) include at least pieces of time-division data to be obtained by the reproducing device so as to carry out a live reproduction of the content data and (ii) are distributed during a certain time period; (b) generating new metadata from the metadata each time the metadata is obtained in the step (a); and (c) sequentially obtaining the only respective pieces of time-division data from the distribution server based on a latest piece of the new metadata generated in the step (b), and reproducing the only respective pieces of time-division data thus obtained, the new metadata being metadata which contains all resource location specifiers contained in at least one of (i) the latest metadata generated in the step (b) and (ii) the new metadata obtained in the step (a).

According to the configuration, the reproducing method of the present invention brings about an effect similar to that of the reproducing device of the present invention.

The present invention encompasses a reproducing system including the generating device and the reproducing device of the present invention.

The present invention encompasses (i) a program for causing a computer to operate as the generating device or the reproducing device of the present invention, the program causing the computer to serve as the means of the generating device or the reproducing device and (ii) a computer-readable storage medium storing such a program.

The present invention encompasses a data structure of metadata which (i) relates to the content data which is subjected to a live-distribution while being subjected to time-division to have a plurality of pieces of time-division data and (ii) contains meta information for specifying a location of a piece of time-division data to be obtained by a reproducing device which carries out a live reproduction, wherein: the metadata contains a piece of meta information for specifying a location of a time-division data group corresponding to a predetermined time period; the piece of meta information has a data structure which is selected from a first data structure and a second data structure in accordance with time which has elapsed since a start of a live distribution of the content data, the first data structure containing a second resource location specifier indicative of a location of metadata containing first resource location specifiers indicative of locations of respective pieces of time-division data constituting the time-division data group, the second data structure containing third resource location specifiers indicative of locations of respective pieces of time-division data constituting the time-division data group.

### Advantageous Effects of Invention

As above described, the generating device and the generating method of the present invention can generate metadata which (i) relates to a live-distributed content data, (ii) enables a reproducing device to carry out a trick reproduction from an arbitrary reproduction point, and (iii) achieves better distribution efficiency than a conventional technique.

The reproducing device and the reproducing method of the present invention can reproduce a live content based on MPD data generated by the generating device of the present invention.

### Brief Description of Drawings

Fig. 1 is a view illustrating a configuration of a client device and a distribution server, in accordance with an embodiment of the present invention.
Fig. 2 is a view illustrating an overall configuration of a distribution system, in accordance with an embodiment of the present invention.
Fig. 3 is a view schematically illustrating an example of MPD (Media Presentation Description) data to which the client device of Fig. 1 refers.
Fig. 4 is a flowchart illustrating an embodiment of an operation which is carried out when a metadata generating section included in the distribution server of Fig. 1 periodically updates MPD data.
Fig. 5 is a view schematically illustrating an example of a remote object to which the client device of Fig. 1 refers.
Fig. 6 is a flowchart illustrating an embodiment of an operation which is carried out by the client device of Fig. 1 before a video content is reproduced.
Fig. 7 is a view illustrating a configuration of a client device and a distribution server, in accordance with another embodiment of the present invention.
Fig. 8 is a view illustrating an overall configuration of a distribution system, in accordance with another embodiment of the present invention.
Fig. 9 is a view schematically illustrating an example of (i) MPD data distributed from the distribution server of Fig. 7 to the client device of Fig. 7 and (ii) MPD data generated by the client device of Fig. 7.
Fig. 10 is a flowchart illustrating an embodiment of an operation which is carried out when a metadata generating section included in the distribution server of Fig. 7 periodically updates MPD data.
Fig. 11 is a flowchart illustrating an embodiment of an operation which is carried out by the client device of Fig. 7 before a video content is reproduced by the client device.
Fig. 12 is a flowchart illustrating, in detail, a process flow of a step in the flowchart of Fig. 11.
Fig. 13 is a view schematically illustrating a temporal relation between (i) a timing at which the distribution server of Fig. 7 updates MPD data of a video content, (ii) Periods of the video content, (iii) timings at which client devices obtain MPD data, and (iv) time periods during which each of the client devices reproduces videos of the Periods.
Fig. 14 is a view schematically illustrating an example of MPD data.
Fig. 15 is a view schematically illustrating an example of MPD data which is updated by a conventional MPD Update process.
Fig. 16 is a view schematically illustrating another example of MPD data which is updated by a conventional MPD Update process.
Fig. 17 is a view illustrating an example of initial MPD data.
Fig. 18 is a view schematically illustrating an example of MPD data to which the client device of Fig. 7 refers.

### Description of Embodiments

### [Embodiment 1]

A distribution system of Embodiment 1 of the present invention carries out, with respect to a client device, a live- streaming distribution of a video content (e.g., a live broadcast of sports) whose distribution end time is not fixed at its distribution start time. Note that, according to the distribution system, the foregoing data formats, conforming to the DASH standard, are used as metadata and a media segment.

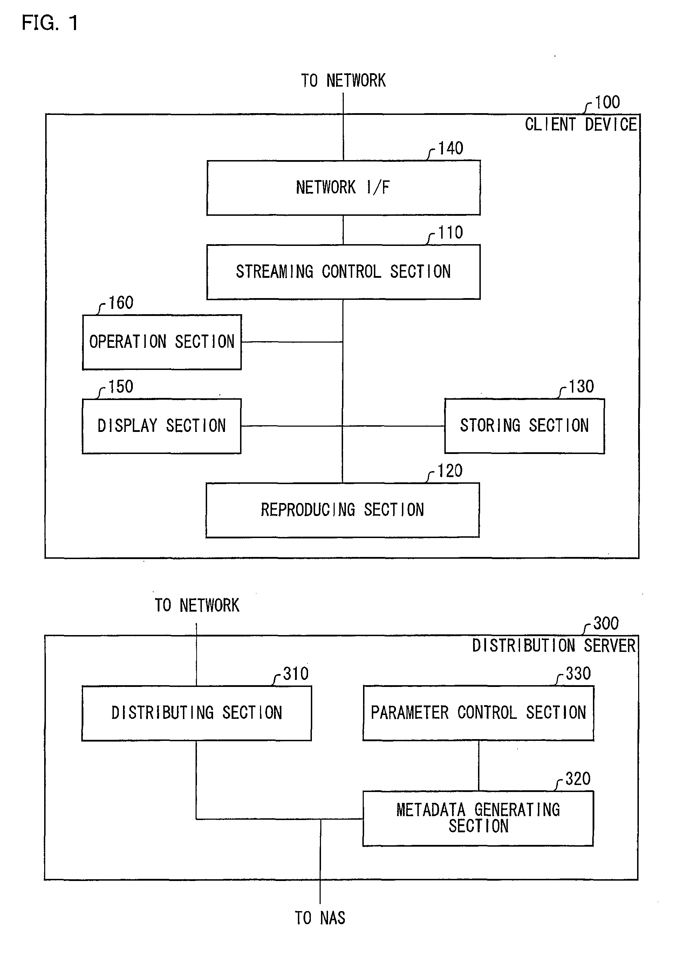

The following description will discuss the distribution system of Embodiment 1, with reference to Figs. 1 through 6.

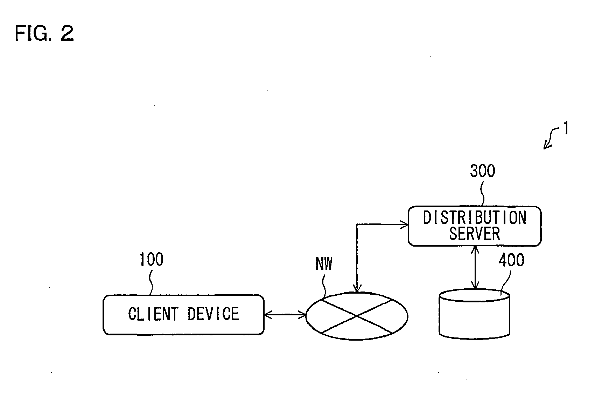

Fig. 1 shows an overall configuration of a client device and a distribution server, in accordance with Embodiment 1. Fig. 2 shows an overall configuration of a distribution system 1 in accordance with Embodiment 1.

The distribution system 1 includes a client device 100, a distribution server 300, and a network storage server (NAS) 400 (see Fig. 2). The client device 100 and the distribution server 300 are connected to the Internet NW.

The following description will discuss the client device 100, the distribution server 300, and the NAS 400.

### (Client Device 100)

The client device 100 includes a streaming control section 110, a reproducing section 120, a storing section 130, a network I/F 140, a display section 150, and an operation section 160 (see Fig. 1).

When the client device 100 accepts, from a user via the operation section 160, an instruction on reproducing a video content, the client device 100 (i) receives, in media segments from the distribution server 300, a video content to be live reproduced and (ii) reproduces the video content in media segments. Hereinafter, a video content to be reproduced in response to an instruction is referred to also as "target video content", and the media segment, which is a data unit obtained by dividing encoded data of the video content for each predetermined time period, is referred to also as "MS".

Specifically, when the client device 100 accepts a reproduction instruction, the client device 100 receives MPD data (second metadata) relating to a target video content from the distribution server 300, and then specifies a URL (first resource location specifier, third resource location specifier) of an MS to be received, so as to reproduce the target video content. When a start time of distributing of the target video content comes, the client device 100 (i) receives the MS, which is specified by the URL, from the distribution server 300 and then (ii) starts reproducing the target video content. During the reproduction of the target video content, the client device 100 periodically obtains MPD data from the distribution server 300. During the reproduction of the target video content, the client device 100 consistently receives, based on latest MPD data, an MS required for continuing the reproduction of the target video content.

### (Streaming Control Section 110)

The streaming control section 110 periodically receives latest MPD data, which is in a latest state at that time, from the distribution server 300.

By referring to (i) the latest MPD data and (ii), if necessary, a remote object (later described), the streaming control section 110 specifies start times of distributing of respective MSs constituting a part of a target video content which part is to be reproduced. Note that the start times of distributing of the respective MSs in the latest MPD data also means start times of reproducing of the respective MSs during a live reproduction. The streaming control section 110 (i) specifies a URL of a target MS, which is to be reproduced, based on (a) a current time (in a case of a live reproduction) or a time specified by the user (in a case of a trick reproduction) and (b) specified start times of distributing of the respective MSs and then (ii) transmits an HTTP request, for receiving the target MS, to the distribution server 300.

The streaming control section 110 controls the storing section 130 to buffer MSs which have been received from the distribution server 300.

### (Reproducing Section 120)

The reproducing section 120 (i) reads out MSs, which have been buffered in the storing section 130, in an order in which the MSs are reproduced and then (ii) decodes and reproduces the MSs thus read out from the storing section 130. This causes a target video content to be displayed on the display section 150.

### (Storing Section 130)

The storing section 130 is a storage medium for (i) buffering MSs constituting a target video content and (ii) storing MPD data relating to the target video content.

### (Network I/F 140)

The network I/F 140 transmits data to or receives data from the distribution server 300.

### (Display Section 150)

The display section 150 is a display device on which a target video content is displayed.

### (Operation Section 160)

The operation section 160 is an operation panel via which the user enters instructions to the client device 100.

### (Distribution Server 300)

The distribution server 300 includes a distributing section 310, a metadata generating section 320, and a parameter control section 330.

When a start time of distributing of a target video content comes, a live encoder (not illustrated) sequentially encodes MSs constituting the target video content, and encoded MSs are stored in the NAS 400. Simultaneously, the metadata generating section 320 (i) repeatedly (for each 10 minutes in Embodiment 1) generates pieces of MPD data relating to the target video content so as to update MPD data to its latest one and (ii) generates a remote object (first metadata) later described.

The parameter control section 330 controls, based on instructions by a person in charge in a distribution service provider, various kinds of parameters to which the metadata generating section 320 refers so as to generate MPD data.

When the distributing section 310 receives a request for MPD data from the client device 100, the distributing section 310 transmits, to the client device 100, latest MPD data which is stored in the NAS 400. When the distribution server 300 receives an HTTP request for an MS from the client device 100, the distribution server 300 distributes the MS, stored in the NAS 400, to the client device 100.

### (NAS 400)

The NAS 400 is a network storage for storing (i) MSs constituting a video content, (ii) MPD data relating to the video content, and (iii) a remote object (later described).

### (MPD Data)

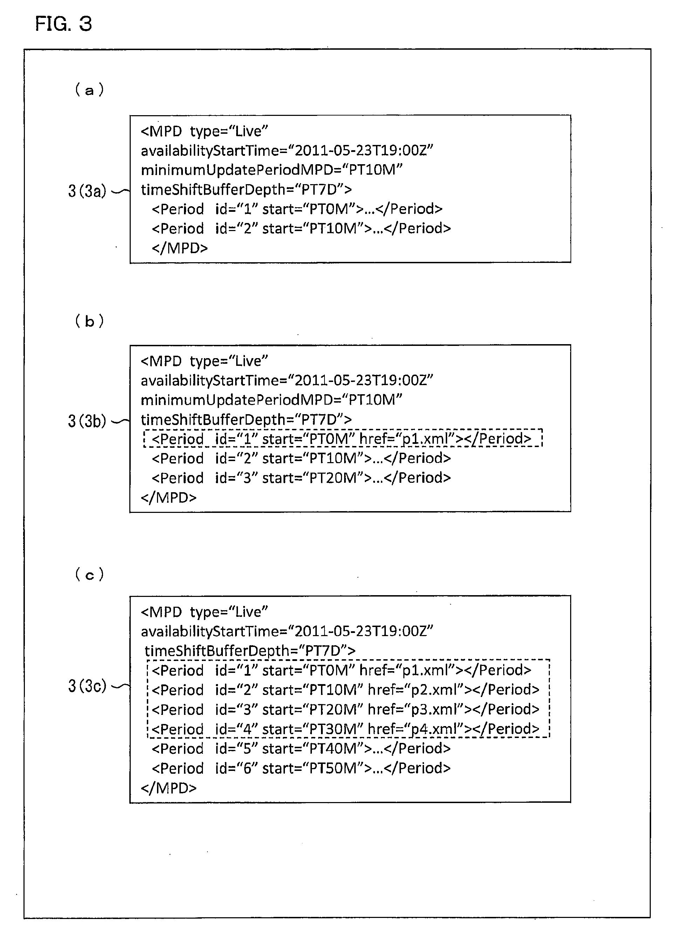

The following description will discuss the MPD data with reference to Fig. 3. Fig. 3 schematically illustrates an example of a part of MPD data to which the client device 100 refers so as to specify an MS to be received and which is stored by the NAS 400. Note that a part, between a start tag of and an end tag of a Period, indicated by "..." (see Fig. 3), means that information such as a group, a representation, and a URL indicative of a location of an MS, as is disclosed in Non Patent Literature 2. That is, considerable bytes of data are contained in the part indicated by "...".
(a) of Fig. 3 shows initial MPD data 3(3a) described at a start time (distribution start time) of distribution. (b) of Fig. 3 shows MPD data 3(3b) described at a time point 10 minutes have elapsed since the distribution start time, i.e., at which time point an end time of the distribution (distribution end time) is not fixed. (c) of Fig. 3 shows MPD data 3(3c) at a time point 40 minutes have elapsed since the distribution start time, i.e., at which time point the distribution end time has been fixed.

As is clear from (b) and (c) of Fig. 3, elements "Period" in the MPD data 3b and the MPD data 3c, which have been updated, contain (i) a first element (the part indicated by dots in (b) and (c) of Fig. 3) which contains an attribute "href" whose attribute value is a URL (second resource location specifier) indicative of a location of a remote object and (ii) a second element which does not contain the attribute "href" but contains, as an element value, a URL (third resource location specifier) indicative of a location of an MS constituting a Period corresponding to the second element. Hereinafter, the first element is referred to also as "external reference Period element," and the second element is referred to as "normal Period element." The external reference Period element (first data structure) has a blank element value, and is therefore quite smaller in data size of information relating to a Period corresponding to the external reference Period element, than the normal Period element (second data structure).

Comparison between (a) through (c) of Fig. 3 shows that, (i) in the MPD data 3a, an element "Period", which corresponds to an initial Period (corresponding to "a predetermined time period" recited in claim directing to data structure), is a normal Period element and, (ii) in the MPD data 3b, an element "Period", which corresponds to an initial Period, is an external reference Period element. Specifically, at the distribution start time, the element "Period", which corresponds to the initial Period in MPD data 3, has a data structure (corresponding to "second data structure" recited in claims) which is in a format of the normal Period element (see (a) of Fig. 3). Then, as time has elapsed since the distribution start time, the element "Period" is changed to have a data structure (corresponding to "first data structure" recited in claims) which is in a format of the external reference Period element (see (b) of Fig. 3).

### (Generating MPD Data)

The following description will discuss, with reference to Figs. 3 through 5 and Fig. 17, how the metadata generating section 320 generates latest MPD data when updating MPD data.

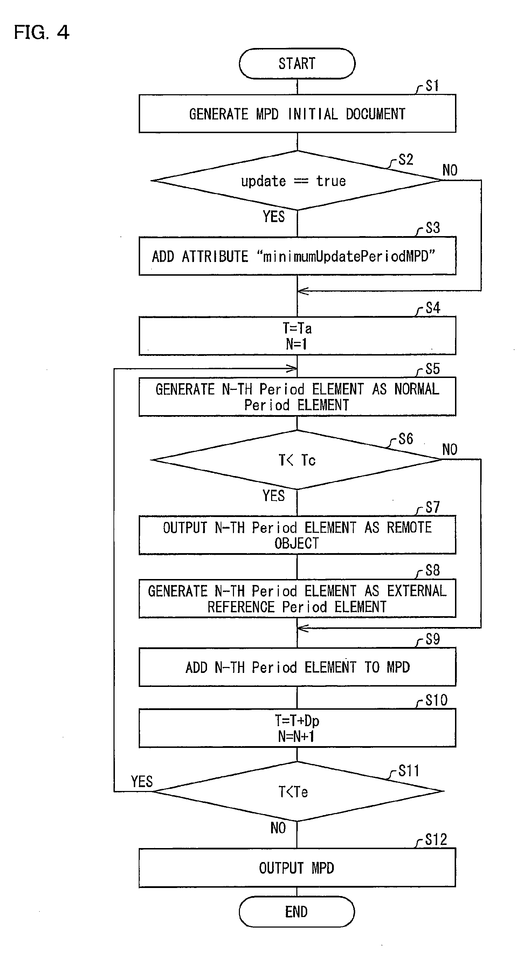

Fig. 4 is a flowchart illustrating how the metadata generating section 320 generates the latest MPD data. Note that, when the metadata generating section 320 starts the flow of Fig. 4, the following parameters are supplied to the metadata generating section 320 from the parameter control section 330:
"update": in a case where MPD data needs to be updated next time, the parameter "update" = "true", whereas, in a case where the MPD data does not need to be updated next time because an end time of distributing of a target video content has been fixed, the parameter "update" = "false." Note that the parameter "update" is set to "false" in a case where, for example, the metadata generating section 320 has received information, which indicates that a distribution end time has been fixed, from a person in charge in a distribution service provider via an operation section (not illustrated).
Dₚ: A time period during which a target video content belonging to one (1) Period is reproduced (i.e., a total reproduction time of MSs which can be contained in one (1) Period). In a case where the MPD data shown in Fig. 3 is generated, the parameter Dₚ is "10 minutes".
Tₐ: A start time of distributing of a target video content (i.e., a start time of a live reproduction of the target video content).
T_{c}: A time point at which concerned MPD data is generated (i.e., a current time).
Tₑ: A threshold based on which a Period that needs to be contained in the concerned MPD data is determined.

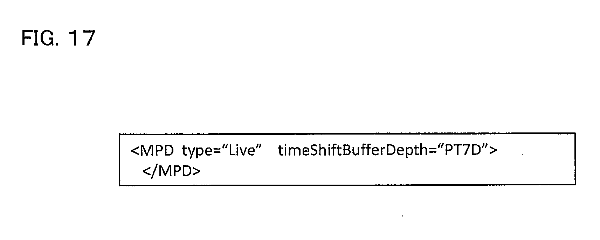

First, an MPD initial document (such as that illustrated in Fig. 17) is prepared (S1) which is made up of only common elements which will not be changed even when MPD data is updated.

Then, in a step S2, the metadata generating section 320 determines whether or not a distribution end time, at which distribution of a target video content is ended, has been fixed. In a case where the metadata generating section 320 determines that the distribution end time has not been fixed yet (YES in S2), the metadata generating section 320 adds an attribute "minimumUpdatePeriodMPD" to an element "MPD" (S3). In a case where, for example, the metadata generating section 320 generates MPD data (such as that shown in (b) of Fig. 3) after 10 minutes have elapsed since a distribution start time at which the distribution of the target video content starts, the distribution end time is not fixed yet. In such a case, the metadata generating section 320 (i) adds an attribute "minimumUpdatePeriodMPD" to the element "MPD" and (ii) sets an attribute value "PT10M", which corresponds to intervals Dₚ at which the MPD data is updated.

On the other hand, in a case where the metadata generating section 320 determines that the distribution end time has been fixed (NO in S2), the process proceeds to a step S4, instead of adding the attribute "minimumUpdatePeriodMPD" to the element "MPD". In a case where, for example, the metadata generating section 320 updates the MPD data after 40 minutes have elapsed since the distribution start time, the element "MPD" in updated MPD data (see (c) of Fig. 3) does not contain the attribute "minimumUpdatePeriodMPD" because the distribution end time has been fixed.

In the step S4, the metadata generating section 320 carries out (i) initialization so that a processing object time variable T is set to Tₐ and (ii) initialization so that a variable N is set to 1. The variable N indicates what Period number a processing object Period is from a first (initial) Period of the target video content.

In a step S5, the metadata generating section 320 generates, as a normal Period element, information relating to an N-th Period, and then the process proceeds to a step S6. In the step S6, the metadata generating section 320 determines whether or not T < T_{c}. In a case where the metadata generating section 320 determines that T ≥ T_{c} (NO in S6), the process proceeds to a step S9.

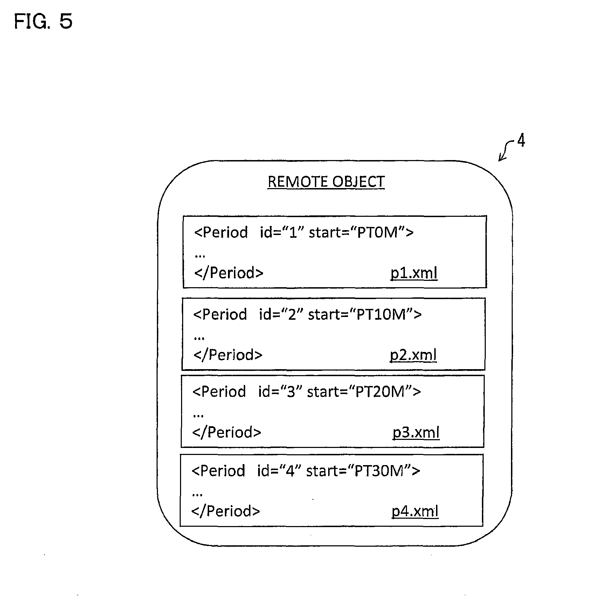

On the other hand, in a case where the metadata generating section 320 determines that T < T_{c} (YES in S6), the metadata generating section 320 supplies, to the NAS 400 as a remote object, the normal Period element which has been generated in the step S5 (S7), and the process proceeds to a step S8. Note that a remote object 4 relating to the N-th Period is stored in the NAS 400, separately from MPD data and other remote object (see an example illustrated in Fig. 5). According to the operation example, the remote object 4 relating to the N-th Period is stored as an XML file having a file name "pN.xml" (where "N" indicates a numeric value, and in a case where, for example, N = 1, the file name is "p1.xml". Hereinafter, note that the term "pN.xml" has identical meaning).

In the step S8, the metadata generating section 320 generates an external reference Period element which refers to the remote object 4 generated in the step S7, and the process proceeds to a step S9.

In the step S9, the metadata generating section 320 adds, as a part of MPD data to be generated, Period information relating to the N-th Period, which Period information has been generated most recently. For example, in a case where a last step is the step S8, the Period information is the external reference Period element generated in the step S8. In a last step is the step S6, the Period information is the normal Period element generated in the step S5.

In a step S10, the metadata generating section 320 (i) adds a value of Dₚ to the time variable T and (ii) adds 1 to the variable N, in order to carry out a process with respect to a following Period. Then, the process proceeds to a step S11.

In the step S11, the metadata generating section 320 determines whether or not T < Tₑ. In a case where the metadata generating section 320 determines that T < Tₑ (YES in S11), the process returns to the step S5 in order to generate Period information for a Period which has not been processed. On the other hand, in a case where the metadata generating section 320 determines that T ≥ Tₑ (NO in S11), generation of Period information, which needs to be contained in the MPD data, is finished, and then the process proceeds to a step S12.

In the step S12, the metadata generating section 320 (i) controls the NAS 400 to store the MPD data (i.e., latest MPD data which has been updated) generated in the steps S1 through S11 and (ii) ends the processes to generate the MPD data. Note that the latest MPD data is read out from the NAS 400 in response to a request from the client device 100 and is then distributed by the distributing section 310 to the client device 100.

How the metadata generating section 320 updates the MPD data has been thus described. With such updates, the MPD data, which has been updated after the distribution end time has been fixed, contains external reference Period elements and normal Period elements corresponding to respective all Periods constituting the target video content. As such, in a case where a request is transmitted from the client device 100 to the distribution server 300 after MPD data has been updated and after the distribution end time is fixed, the distribution server 300 (i) reads out, from the NAS 400, the MPD data which contains pieces of Period information corresponding to respective all Periods constituting the target video content and then (ii) distributes the MPD data to the client device 100.

In a case where intervals at which the MPD data is updated are set to the time period Dₚ when MPD data is generated, it is possible for the time point T_{c} to be identical with a start time of reproducing of the N-th Period. Therefore, (i) external reference Period elements, which are generated for respective first through (N-1)th Periods, never contain a URL of an MS unnecessary for a live reproduction and (ii) normal Period elements, which are generated for respective N-th and subsequent Periods, never contain a URL of such an unnecessary MS, neither. Moreover, the threshold Tₑ is set to (T_{c} + 2Dₚ) in a case where the "update" = "true," whereas Tₑ is set to "end time of distributing of a concerned target video content" in a case where "update" = "false." It is therefore possible to contain, in the concerned MPD data, a URL(s) of only an MS(s) to be live distributed and live reproduced during a time period between (a) a time point when a client device 100 receives latest MPD data and (b) a time point when the client device 100 receives next MPD data (i.e., during a time period indicated by the attribute "minimumUpdatePeriodMPD"). In other words, it is possible to generate MPD data, which contains a minimum of normal Period element(s) and has high distribution efficiency, required for carrying out a live reproduction.

The following description will discuss, with reference to Figs. 3, 5, and 6, how the client device 100, which has accepted a reproduction instruction via the operation section 160, reproduces a target video content distributed by the distribution server 300.

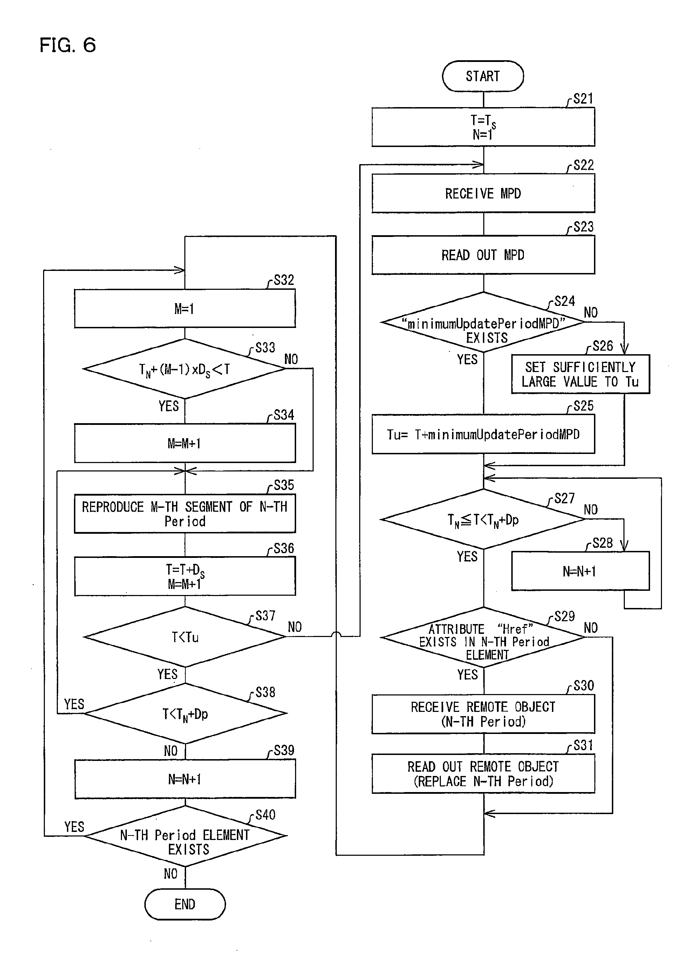

Fig. 6 is a flowchart illustrating how the client device 100 operates. Note that, in Fig. 6, "Tₛ" is an input parameter indicative of a reproduction start point which is determined based on a reproduction instruction entered by the user via the operation section 160. In a case where the reproduction instruction is an instruction on a live reproduction, the input parameter Tₛ indicates a current time. In a case where the reproduction instruction is an instruction on a trick reproduction, the input parameter Tₛ indicates a time specified based on the reproduction instruction.

"Dₚ" of Fig. 6 indicates a time period during which a target video content belonging to a Period is reproduced (the parameter Dₚ is obtained as (i) an attribute value of an attribute "duration" of an element "Period" in MPD data or (ii) a difference between two attribute values of attributes "start" of successive two elements "Period" in the MPD data). "Dₛ" of Fig. 6 indicates a time period during which one (1) MS is continuously reproduced (the parameter Dₛ is obtained as an attribute value of an attribute "duration" of an element "SegmentInfo" in the MPD data).

Before a reproduction process, the streaming control section 110 carries out (i) initialization so that a time variable T, which indicates a processing object time, is set to Tₛ, and (ii) initialization so that a variable N is set to 1, which variable N is indicative of a Period to be processed (S21).

In a step S22, the streaming control section 110 requests the distribution server 300 to transmit MPD data to the streaming control section 110, receives the MPD data from the distribution server 300, and then controls the storing section 130 to store the MPD data. In a step S23, the streaming control section 110 reads out the MPD data which has been received and then stored in the storing section 130 in the step S22. Then, the process proceeds to a step S24.

In the step S24, the streaming control section 110 determines whether or not an attribute "minimumUpdatePeriodMPD" exists in the MPD data which has been read out in the step S23.

In a case where the streaming control section 110 determines that the attribute "minimumUpdatePeriodMPD" exists in the MPD data (YES in S24), the streaming control section 110 substitutes a sum of the time variable T and an attribute value of the attribute "minimumUpdatePeriodMPD" for a time variable Tᵤ (S25). The time variable Tᵤ indicates a time at which the streaming control section 110 receives another MPD data next from the distribution server 300. Then, the process proceeds to a step S27.

On the other hand, in a case where the streaming control section 110 determines that the attribute "minimumUpdatePeriodMPD" does not exist in the MPD data (NO in S24), updating of the MPD data is no longer required. The streaming control section 110 therefore sets the time variable Tᵤ to a value (e.g., a value indicating one month after a time indicated by the time variable T), which indicates a time sufficiently later than the end time of distributing of the target video content (S26). Then, the process proceeds to a step S27.

In the step S27, the streaming control section 110 determines whether or not an N-th Period is a Period to be reproduced. Specifically, the streaming control section 110 determines whether or not T_{N} ≤ T < T_{N} + Dₚ, with the use of an attribute value T_{N} of an attribute "start" indicative of a distribution start time (and a live reproduction start time) of the N-th Period. In a case where the streaming control section 110 determines that T_{N} ≤ T < T_{N} + Dₚ is not true, the streaming control section 110 determines that the N-th Period is not a Period to be reproduced (NO in S27), and the streaming control section 110 adds 1 to N so that a following Period becomes a Period to be reproduced (S28). Then, the process returns to the step S27.

On the other hand, in a case where the streaming control section 110 determines that T_{N} ≤ T < T_{N} + Dₚ, the streaming control section 110 determines that the N-th Period is a Period to be reproduced (YES in S27), and then the streaming control section 110 determines, based on existence or nonexistence of an attribute "href", whether the N-th Period corresponds to an external reference Period element or a normal Period element (S29).

In a case where the streaming control section 110 determines that the N-th Period corresponds to a normal Period element (NO in S29), the process proceeds to a step S32. On the other hand, in a case where the streaming control section 110 determines that the N-th Period corresponds to an external reference Period element (YES in S29), the streaming control section 110 receives an XML file pN.xml (i.e., a remote object 4) from the distribution server 300 by referring to an attribute value of an attribute "href" of the external reference Period element corresponding to the N-th Period (S30).

After the step S30, the streaming control section 110 reads out the XML file (remote object) pN.xml (S31) which has been received in the step S30. Then, the process proceeds to a step S32. Note that, as early described, the XML file pN.xml is a normal Period element indicative of the N-th Period. That is, the XML file pN.xml contains a URL (first resource location specifier) which indicates locations of individual MSs (individual pieces of time-division data constituting a time-division data group) belonging to the N-th Period. This allows the client device 100 to reproduce the N-th Period based on the XML file pN.xml.

In the step S32, the streaming control section 110 carries out initialization so that a variable M is set to 1, which variable M indicates an MS to be processed in the N-th Period (S32), and then the process proceeds to a step S33.

In the step S33, the streaming control section 110 determines whether or not T_{N} + (M-1) x Dₛ < T. In a case where the streaming control section 110 determines that T_{N} + (M-1) × Dₛ < T (YES in S33), the streaming control section 110 (i) determines that the MS is not an MS to be reproduced and (ii) adds 1 to the variable M (S34). Then, the process returns to the step S33.

On the other hand, in a case where the streaming control section 110 determines that T_{N} + (M-1) × Dₛ ≥ T (NO in S33), the streaming control section 110 (i) determines that the MS (an M-th MS in the N-th Period) is an MS to be reproduced and (ii) reproduces the M-th MS (S35).

Specifically, the streaming control section 110 specifies a URL of the M-th MS by referring to (i) the MPD data read out in the step S23 or (ii) a normal Period element of the N-th Period which element is the remote object 4 read out in the step S31, receives the M-th MS by accessing a specified URL, and then controls the storing section 130 to buffer the M-th MS. Then, the reproducing section 120 reproduces the M-th MS buffered in the storing section 130.

After the step S35, the streaming control section 110 (i) adds, to the time variable T, a value of Dₛ corresponding to a time period during which the M-th MS has been reproduced in the step S35 and (ii) adds 1 to the variable M so that an MS to be processed is updated (S36). Then, the process proceeds to a step S37.

In the step S37, the streaming control section 110 determines whether or not T < Tᵤ. In a case where the streaming control section 110 determines that T ≥ Tᵤ (i.e., it is time to obtain another MPD data) (NO in S37), the process returns to the step S22.

On the other hand, in a case where the streaming control section 110 determines that T < Tᵤ (YES in S37), the streaming control section 110 determines whether or not T < T_{N} + Dₚ so as to determines whether or not there exists an MS, which is to be reproduced, in the N-th Period (S38).

In a case where the streaming control section 110 determines that T < T_{N} + Dₚ (YES in S38), the process returns to the step S35. On the other hand, in a case where the streaming control section 110 determines that T ≥ T_{N} + Dₚ (i.e., it is time to reproduce an MS of a following Period) (NO in S38), the streaming control section 110 adds 1 to the variable N (S39).

After the step S39, the streaming control section 110 determines whether or not information relating to an N-th Period is contained in the MPD data read out in the step S23 (S40). In a case where the streaming control section 110 determines that information relating to an N-th Period is contained (YES in S40), the process returns to the step S29. Whereas, in a case where the streaming control section 110 determines that no information relating to N-th Period is contained (NO in S40), the reproduction process is ended.

### (Advantages of Distribution System 1)

The distribution server 300 of the distribution system 1 thus generates repeatedly, during a live distribution of a target video content, MPD data containing meta information for specifying a location of an MS to be obtained by the client device 100 which carries out a live reproduction.

The metadata generating section 320 of the distribution server 300 generates a remote object (first metadata) containing a URL (a first resource location specifier indicative of a location of time-division data) of an MS belonging to a past Period (which was distributed in a past predetermined time period and whose live reproduction was ended).

The metadata generating section 320 generates MPD data (second metadata) which contains, as meta information, (i) URLs (second resource location specifier) indicative of locations of respective remote objects 4 containing URLs (first resource location specifier) of respective MSs, belonging to a past Period, out of the plurality of MSs and (ii) URLs (third resource location specifier) of respective MSs, belonging to the other Periods, out of the plurality of MSs.

According to the client device 100 of the distribution system 1, the streaming control section 110 obtains MPD data. The MPD data, obtained by the streaming control section 110, contains (i) URLs of respective MSs belonging to a Period necessary for a live reproduction and (ii) a URL of a remote object 4 containing a URL of an MS which (a) belongs to a past Period and (b) should be obtained. In a case of, for example, a time shift reproduction in which MS(s), belonging to the past Period, is required to be reproduced, the streaming control section 110 obtains a remote object 4 by referring to a URL.

The reproducing section 120 sequentially obtains MSs from the distribution server 300 based on obtained MPD data, and sequentially reproduces the MSs thus obtained. In a case where MPD data does not contain a URL of an MS to be obtained, the streaming control section 110 (i) obtains a remote object by referring to a URL which is described in the MPD data and is indicative of a location of the remote object and then (ii) receives an MS, which is to be obtained, by referring to a URL described in the remote object. Then, the reproducing section 120 reproduces the MS.

With the configuration, the distribution server 300 of the distribution system 1 can generate MPD data which (i) enables the client device 100 to carry out a trick reproduction of a live content from an arbitrary reproduction point and (ii) achieves higher efficiency in data distribution than a conventional efficiency.

The client device 100 can carry out, by referring to such MPD data, a live reproduction of a target video content or a trick reproduction of the target video content from an arbitrary reproduction start point.

### [Embodiment 2]

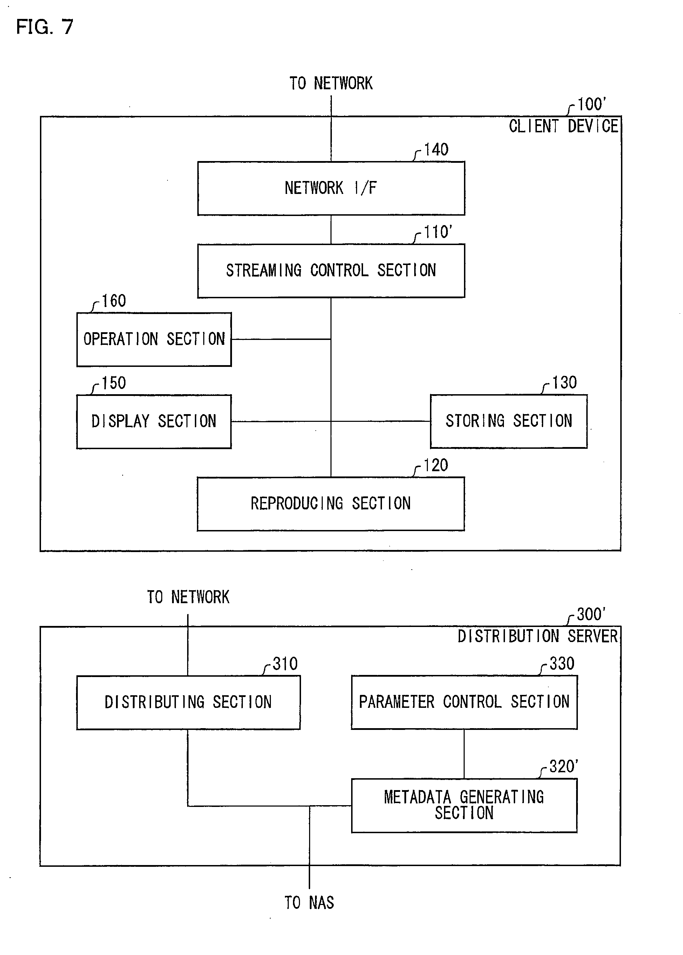

The following description will discuss a distribution system of Embodiment 2 of the present invention, with reference to Figs. 7 through 12.

The distribution system of Embodiment 2 includes a distribution server which is different from the distribution server 300 of Embodiment 1. Specifically, the distribution server of Embodiment 2 (i) periodically updates old MPD data with new MPD data (i.e., MPD data having information relating to a minimum of Period(s) necessary and sufficient for a live reproduction) which does not contain information relating to a Period unnecessary for the live reproduction and (ii) transmits the new MPD data to a client device. The distribution system of Embodiment 2 includes the client device which is different from the client device 100 of Embodiment 1. Specifically, the client device of Embodiment 2 obtains MPD data, necessary for completing a reproduction of a target video content, by combining (i) MPD data newly obtained from the distribution server with (ii) another MPD data which has already been obtained from the distribution server or has already been combined.

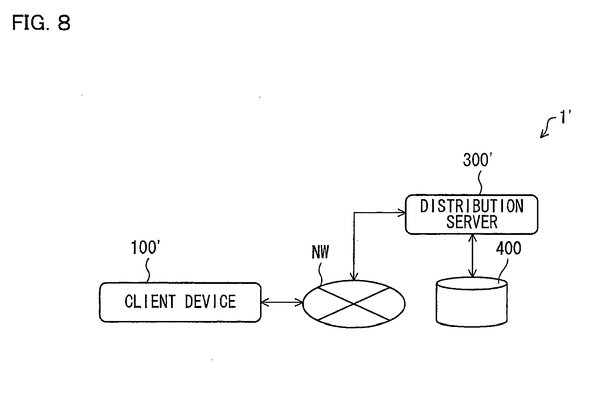

The following description will discuss how a distribution system 1' of Embodiment 2 is configured, with reference to Figs. 7 and 8.

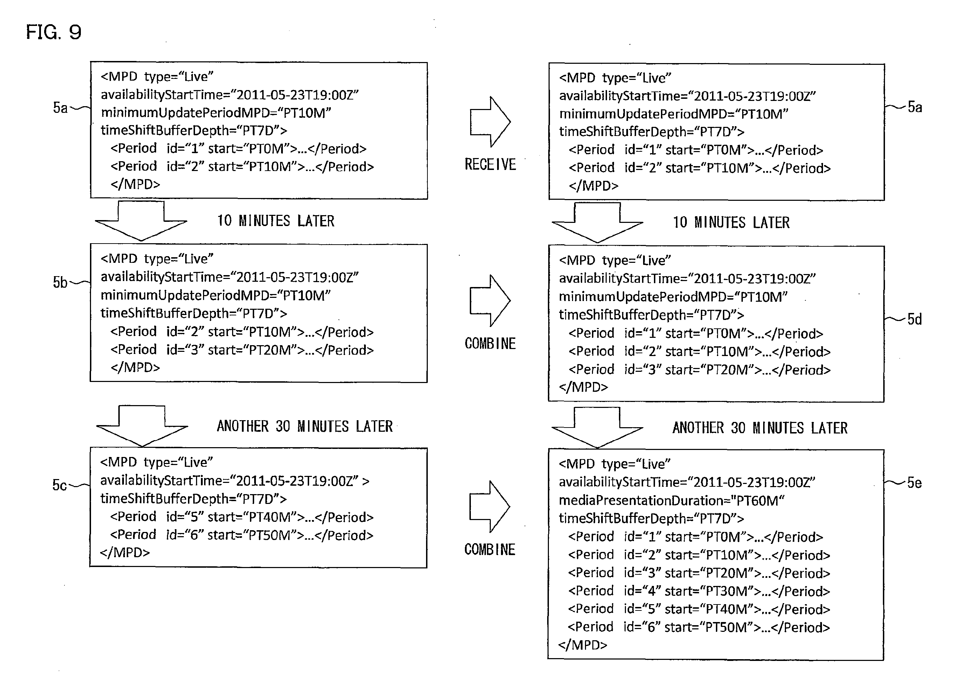

Fig. 7 shows an overall configuration of a client device and a distribution server, in accordance with Embodiment 2. Fig. 8 illustrates an overall configuration of the distribution system 1' in accordance with Embodiment 2. Fig. 9 shows an example of (i) pieces of MPD data which have been updated by the distribution server and (ii) pieces of MPD data which are obtained by combination processes which are carried out by the client device after obtaining pieces of MPD data.

The distribution system 1' includes a client device 100', a distribution server 300', and a network storage server (NAS) 400 (see Fig. 8). The client device 100' and the distribution server 300' are connected to the Internet NW.

The following description will discuss the client device 100' and the distribution server 300'. Note that the NAS 400 of Embodiment 2 is identical with that of Embodiment 1, and the description of the NAS 400 is therefore omitted here.

### (Client Device 100')

The client device 100' includes a streaming control section 110', a reproducing section 120, a storing section 130, a network I/F 140, a display section 150, and an operation section 160 (see Fig. 7). Note that the reproducing section 120, the storing section 130, the network I/F 140, the display section 150, and the operation section 160 are identical with those of Embodiment 1, and the following description will therefore discuss only the streaming control section 110'.

### (Streaming Control Section 110')

The streaming control section 110' (i) periodically obtains, from the distribution server 300', MPD data which is periodically updated by the distribution server 300' and (ii) combines the MPD data thus obtained with another MPD data which has already been obtained from the distribution server 300' or has already been combined. This causes latest MPD data relating to a target video content to be generated.

The streaming control section 110' specifies, by referring to the latest MPD data, times at which the distribution server 300' distributes (or has distributed) respective MSs each constituting a part of the target video content which part is to be reproduced. Start times of distributing of the respective MSs, which start times are described in MPD data, indicate start times of reproducing of the respective MSs during a live reproduction. The streaming control section 110' (i) specifies a URL of a target MS, which is to be reproduced, based on (a) a current time (in a case of a live reproduction) or a time designated by the user (in a case of a trick reproduction) and (b) specified start times of distributing of the respective MSs and then (ii) transmits, to the distribution server 300', an HTTP request for receiving the target MS.

The streaming control section 110' controls the storing section 130 to buffer the MS which has been received from the distribution server 300'.

### (Distribution Server 300')

The distribution server 300' includes a distributing section 310, a metadata generating section 320', and a parameter control section 330. The distributing section 310 and the parameter control section 330 are identical with those of Embodiment 1, and descriptions of the distributing section 310 and the parameter control section 330 are therefore omitted here.

The metadata generating section 320' repeatedly (in Embodiment 2, for each 10 minutes) updates MPD data relating to a target video content. Specifically, the metadata generating section 320' updates the MPD data such that the MPD data contains, as information relating to a Period, minimum Period information (i.e., normal Period element) required for the client device 100' to carry out a live reproduction.

The description has discussed a configuration of the distribution system 1' of Embodiment 2.

The following description will discuss, with reference to Figs. 9 through 12, how the client device 100' and the distribution server 300' of Embodiment 2 operates.

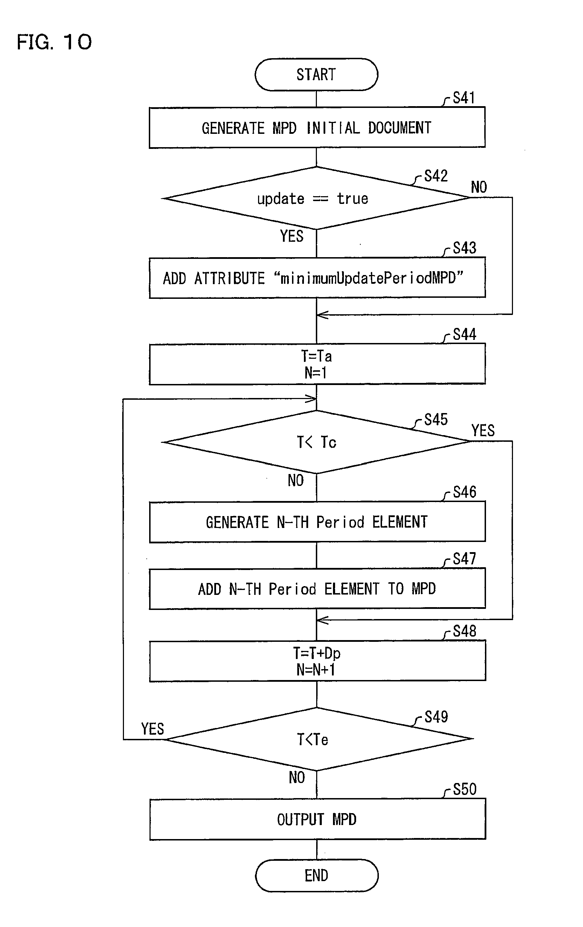

The following description will first discuss, with reference to Figs. 9 and 10, how the metadata generating section 320' of the distribution server 300' updates old MPD data with new MPD data (which contains minimum Period information required for the client device 100' to carry out a live reproduction).

Fig. 9 schematically illustrates an example of (i) a part of MPD data stored in the NAS 400 and (ii) a part of MPD data stored the storing section 130 of the client device 100'. Note that, in Fig. 9, a part indicated by "..." has a meaning similar to that in Fig. 3.

Moreover, "MPD data 5a" at an upper left of Fig. 9 indicates initial MPD data stored in the NAS 400 at a start time (distribution start time) of distributing of a target video content; "MPD data 5b" at a middle left of Fig. 9 indicates MPD data stored in the NAS 400 when 10 minutes have elapsed since the distribution start time and before an end time of the distribution (distribution end time) has not been fixed; and "MPD data 5c" at a lower left of Fig. 9 indicates MPD data stored in the NAS 400 when 40 minutes have elapsed since the distribution start time, i.e., when the distribution end time has been fixed.

In Fig. 9, each of "MPD data 5a" at an upper right, "MPD data 5d" at a middle right, and "MPD data 5e" at a lower right indicates latest MPD data which is stored in the storing section 130. Note that the MPD data 5d is obtained by carrying out a combination process with respect to the MPD data 5b which the client device 100' has received from the distribution server 300', and the MPD data 5e is obtained by carrying out a combination process with respect to the MPD data 5c which the client device 100' has received from the distribution server 300'.

Fig. 10 is a flowchart illustrating how the metadata generating section 320' operates. Note that, in Fig. 10, "Period #N", "Dₚ", "T_{c}", "Tₐ", and "Tₑ" have meanings similar to those in the flowchart illustrated in Fig. 4.

First, the metadata generating section 320' prepares an MPD initial document (as illustrated in Fig. 17) made up of only common elements which will not be changed by updating MPD data (S41).

Next, in a step S42, the metadata generating section 320' determines whether or not a distribution end time of a target video content has been fixed.

In a case where the metadata generating section 320' determines that the distribution end time has not been fixed yet (YES in S42), the metadata generating section 320' adds an attribute "minimumUpdatePeriodMPD" to an element "MPD" (S43). In a case where, for example, the metadata generating section 320' generates MPD data (such as MPD data 5b shown in Fig. 9) after 10 minutes have elapsed since the distribution start time, the distribution end time has not been fixed yet. In such a case, the metadata generating section 320' (i) adds an attribute "minimumUpdatePeriodMPD" to the element "MPD" and (ii) sets an attribute value "PT10M", which corresponds to intervals Dₚ at which the MPD data is updated.

On the other hand, in a case where the metadata generating section 320' determines that the distribution end time has been fixed (NO in S42), the process proceeds to a step S44, instead of adding the attribute "minimumUpdatePeriodMPD" to the element "MPD". In a case where, for example, the metadata generating section 320' updates the MPD data after 40 minutes have elapsed since the distribution start time, the element "MPD" in updated MPD data (such as MPD data 5c shown in Fig. 9) does not contain the attribute "minimumUpdatePeriodMPD" because the distribution end time has been fixed.

In the step S44, the metadata generating section 320' carries out (i) initialization so that a processing object time variable T is set to Tₐ and (ii) initialization so that a variable N is set to 1. The variable N indicates what Period number a processing object Period is from a first (initial) Period of the target video content. Then, the process proceeds to a step S45.

In the step S45, the metadata generating section 320' determines whether or not T < T_{c}. In a case where the metadata generating section 320' determines that T < T_{c} (YES in S45), the process proceeds to a step S48.

On the other hand, in a case where the metadata generating section 320' determines that T ≥ T_{c} (NO in S45), the metadata generating section 320' (i) generates information relating to an N-th Period (S46) and (ii) adds, as a part of the MPD data, the information to the MPD (S47). Then, the process proceeds to the step S48.

In the step S48, the metadata generating section 320' (i) adds a value of Dₚ to the time variable T and (ii) adds 1 to the variable N. Then, the process proceeds to a step S49.

In the step S49, the metadata generating section 320' determines whether or not T < Tₑ. In a case where the metadata generating section 320' determines that T < Tₑ (YES in S49), the process returns to the step S45.

On the other hand, in a case where the metadata generating section 320' determines that T ≥ Tₑ (NO in S49), the metadata generating section 320' (i) updates old MPD data with new MPD data by carrying out the processes of the steps S41 through S49, (ii) controls the NAS 400 to store the new MPD data, and then (iii) ends the processes to generate the MPD data. Note that latest MPD data is read out from the NAS 400 and distributed by the distributing section 310 to the client device 100', in accordance with a timing at which a request is transmitted from the client device 100'.

How the metadata generating section 320' operates has been thus discussed. The following description will discuss the processes of the steps S45 through S47 in detail, with reference to a process example carried out by the distribution server 300' so that MPD data 5a is updated to MPD data 5b after 10 minutes have elapsed since the distribution start time.

In the example, T_{c} becomes (Tₐ + Dₚ) indicating that 10 minutes have elapsed since the distribution start time Tₐ. In a case where the distribution server 300' carries out the step S45 for the first time, N = 1 and T = Tₐ, and therefore the metadata generating section 320' determines that T < T_{c}. As such, the MPD data 5b, which has been updated, does not therefore contain information relating to a first (initial) Period which is not necessary for the client device 100' to carry out the live reproduction.

In a case where the distribution server 300' carries out the step S45 for the second time, N = 2 and T = Tₐ + Dₚ, and therefore the metadata generating section 320' determines that T ≥ T_{c}. The MPD data 5b, which has been subjected to the processes of the steps S46 and S47, therefore contains information relating to a second Period, which is necessary for the client device 100' to carry out the live reproduction.

The following description will discuss, with reference to Figs. 9, 11, and 12, how the client device 100' of Embodiment 2 reproduces a target video content distributed by the distribution server 300'.

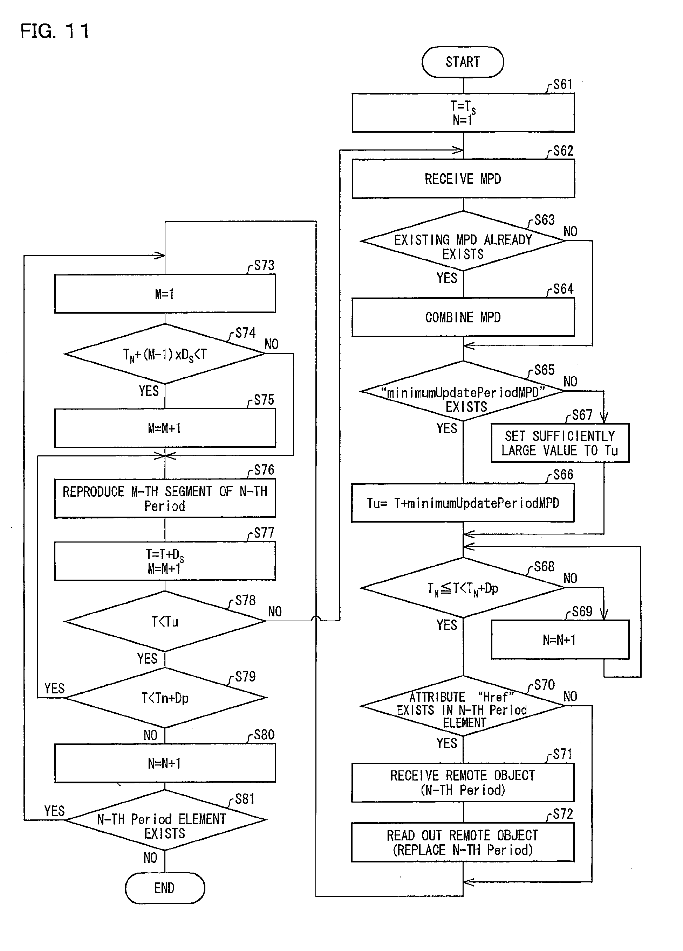

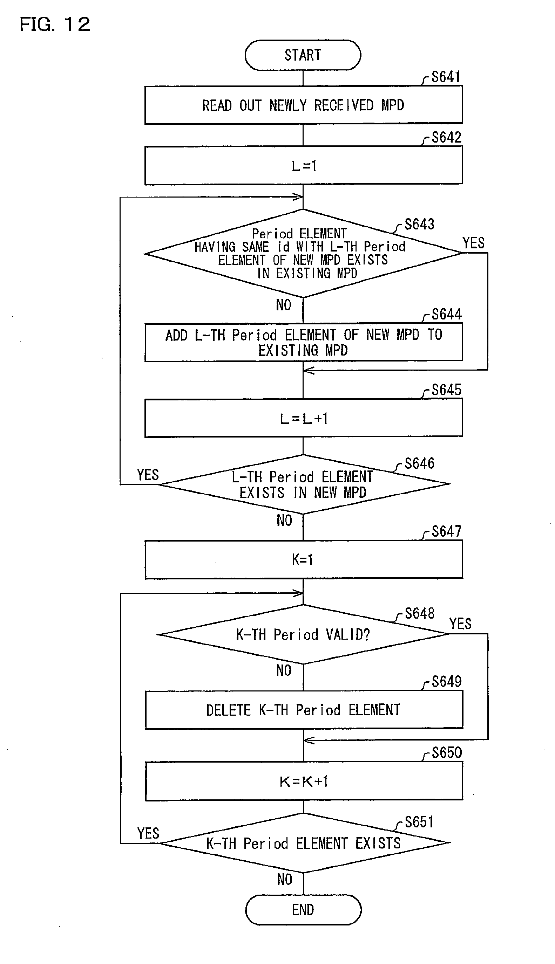

Fig. 11 is a flowchart illustrating how the client device 100' reproduces a target video content distributed by the distribution server 300'. Fig. 12 is a flowchart illustrating, in detail, one step in the flowchart of Fig. 11. Note that, in Figs. 11 and 12, "Dp", "Dₛ", "Tₛ", "Tᵤ", and "T_{N}" have meanings similar to those in the flowchart illustrated in Fig. 6.

Before a reproduction process, the streaming control section 110' carries out (i) initialization so that a time variable T, which indicates a processing object time, is set to Tₛ, and (ii) initialization so that a variable N is set to 1, which variable N is indicative of a Period to be processed (S61).

In a step S62, the streaming control section 110' transmits a request for MPD data, relating to the target video content, to the distribution server 300', receives MPD data from the distribution server 300', and then controls the storing section 130 to store the MPD data. In a step S63, the streaming control section 110' determines whether or not MPD data (hereinafter, referred to as "existing MPD") exists, which relates to the target video content and has been stored in the storing section 130 before the step S62 is carried out.

In a case where the streaming control section 110' determines that no existing MPD exists in the step S63, the process proceeds to the step S65. On the other hand, in a case where the streaming control section 110' determines that an existing MPD exists in the step S63, the process proceeds to the step S64. To put it another way, (i) in a case where, for example, the streaming control section 110' receives initial MPD data (e.g., the MPD data 5a at the upper left in Fig. 9) in the step S62, the process proceeds to the step S65, whereas (ii) in a case where the streaming control section 110' receives MPD data (e.g., the MPD data 5b at the middle left in Fig. 9 or the MPD data 5c at the lower left in Fig. 9) for the second time or subsequently in the step S62, the process proceeds to the step S64.

The streaming control section 110' combines (a) MPD data (hereinafter, referred to as "new MPD") which has been received by the streaming control section 110' and stored in the section 130 in the step S62 with (b) the existing MPD (S64), and then the process proceeds to the step S65. As later described, MPD data, which is obtained by the combining step S64, contains (i) information relating to a Period(s) necessary and sufficient for a live reproduction and (ii) information relating to all previous Periods.

The client device 100' carries out processes in steps S65 through S81, in a manner similar to those in the steps S24 through S40, which are carried out by the client device 100.

The following description will discuss, in detail, how the streaming control section 110' carries out the combining step S64, with reference to Figs. 9 and 12.

First, the streaming control section 110' reads out new MPD (S641). Then, the streaming control section 110' carries out initialization so that a variable L is set to 1 (S642). The variable L is indicative of what Period number a processing object Period is from a first (initial) Period of the new MPD.

Then, in a step S643, the streaming control section 110' determines whether or not the existing MPD contains information relating to a Period, which has an attribute value of an attribute "id" identical with that of an L-th Period in the new MPD. In a case where, for example, the existing MPD is the MPD data 5a of Fig. 9 and the new MPD is the MPD data 5b of Fig. 9, the streaming control section 110' (i) determines that information relating to such a Period (i.e., a Period having an attribute "id" of "2") is contained in the existing MPD in a case where the variable L is 1, whereas (ii) determines that information of such a Period (i.e., a Period having an attribute "id" of "3") is not contained in the existing MPD in a case where the variable L is 2.

In a case where the streaming control section 110' determines that the existing MPD does not contain such information (NO in S643), the streaming control section 110' adds, to the existing MPD, information relating to the L-th Period contained in the new MPD (S644), and then the process proceeds to a step S645. On the other hand, in a case where the streaming control section 110' determines that the existing MPD contains such information (YES in S643), the process merely proceeds to the step S645.

In the step S645, the streaming control section 110' adds 1 to the variable L. Then, in a step S646, the streaming control section 110' determines whether or not the new MPD contains information relating to the L-th Period. In a case where, for example, the existing MPD is the MPD data 5a of Fig. 9 and the new MPD is the MPD data 5b of Fig. 9, the streaming control section 110' (i) determines that the new MPD contains information relating to an L-th Period in a case where the variable L is 1 or 2, whereas (ii) determines that the new MPD does not contain information relating to an L-th Period in a case where the variable L is 3. In the example, the existing MPD becomes like the MPD data 5d of Fig. 9 after the step S646 is carried out with the variable L being 3.

In a case where the streaming control section 110' determines that the new MPD contains information relating to the L-th Period (YES in S646), the process returns to the step S643. On the other hand, in a case where the streaming control section 110' determines that the new MPD does not contain information relating to the L-th Period (NO in S646), the process proceeds to a step S647.

In the step S647, the streaming control section 110' carries out initialization so that a variable K is set to 1. The variable K indicates what Period number a processing object Period is from a first (initial) Period in the MPD data which has been obtained through the processes of the steps S641 through S646.

In a step S648, the streaming control section 110' determines whether or not a K-th Period is valid, based on an attribute value of an attribute "timeShiftBufferDepth" contained in the new MPD. The attribute "timeShiftBufferDepth" is an attribute which (i) is valid only in a live streaming distribution and (ii) is indicative of a time period between (a) a time point when the distribution server 300' starts to distribute an MS and (b) a time point when the distribution server 300' deletes the MS.

Specifically, the streaming control section 110' calculates a distribution start time of the L-th Period based on (i) a start time (i.e., an attribute value of an attribute "start") of the K-th Period and (ii) an attribute value of an attribute "availabilityStartTime". Then, the streaming control section 110' determines that the K-th Period is valid in a case where a value, which is obtained by subtracting a distribution start time of the K-th Period from a current time, is not larger than an attribute value of the attribute "timeShiftBufferDepth". Otherwise, the streaming control section 110' determines that the K-th Period is not valid. In a case where, for example, the existing MPD is the MPD data 5d, the streaming control section 110' determines that start times of distributing of respective first through third Periods are all valid because the distribution start times fall within past 7 days from a current time.

In a case where the K-th Period is determined to be valid in the step S648, the streaming control section 110' carries out a process of a step S650. On the other hand, in a case where the streaming control section 110' determines that the K-th Period is not valid, the streaming control section 110' deletes Period information relating to the K-th Period (S649), and then the process proceeds to the step S650.

In the step S650, the streaming control section 110' adds 1 to the variable K. Then, in a step S651, the streaming control section 110' determines whether or not the existing MPD contains information relating to the K-th Period.

In a case where the streaming control section 110' determines that the existing MPD contains the information relating to the K-th Period (YES in S651), the process returns to the step S648. On the other hand, in a case where the streaming control section 110' determines that the existing MPD does not contain the information relating to the K-th Period (NO in S651), the step S64 is ended, and then the process proceeds to the step S65. Note that the streaming control section 110' can delete the new MPD after the streaming control section 110' determines that "the new MPD does not contain information relating to the L-th Period" in the step S646.

### (Advantages of Distribution System 1')

As above described, the distribution server 300' of the distribution system 1' repeatedly distributes, to the client device 100', MPD data of a target video content which MPD data contains URLs of only respective MSs which are distributed in a predetermined time period including a time at which the MPD data is distributed.

According to the client device 100' of the distribution system 1', the streaming control section 110' generates new MPD data, with the use of obtained MPD data, each time the control section 110' receives MPD data from the distribution server 300'. Then, the reproducing section 120 (i) sequentially obtains MSs, which are to be obtained, based on MPD data generated last time and (ii) sequentially reproduces obtained MSs.

Specifically, the streaming control section 110' generates new MPD data by combining (i) MPD data (existing MPD) which has been generated most recently with (ii) MPD data (new MPD) which has been newly obtained. The new MPD data, which is generated by the combination process, contains all URLs contained in at least one of the existing MPD and the new MPD.

In a case where the client device 100' carries out a live reproduction of a target video content from a distribution start time, MPD data generated by the client device 100' consistently contains URLs of all MSs encompassing an MS currently distributed and MSs which have been distributed previously.

With the configuration, the client device 100' in the distribution system 1' can carry out (i) a live reproduction of a target video content or (ii) a trick reproduction of the target video content from an arbitrary reproduction start point.

### [Modifications of Embodiments 1 and 2]

### (Modification 1)

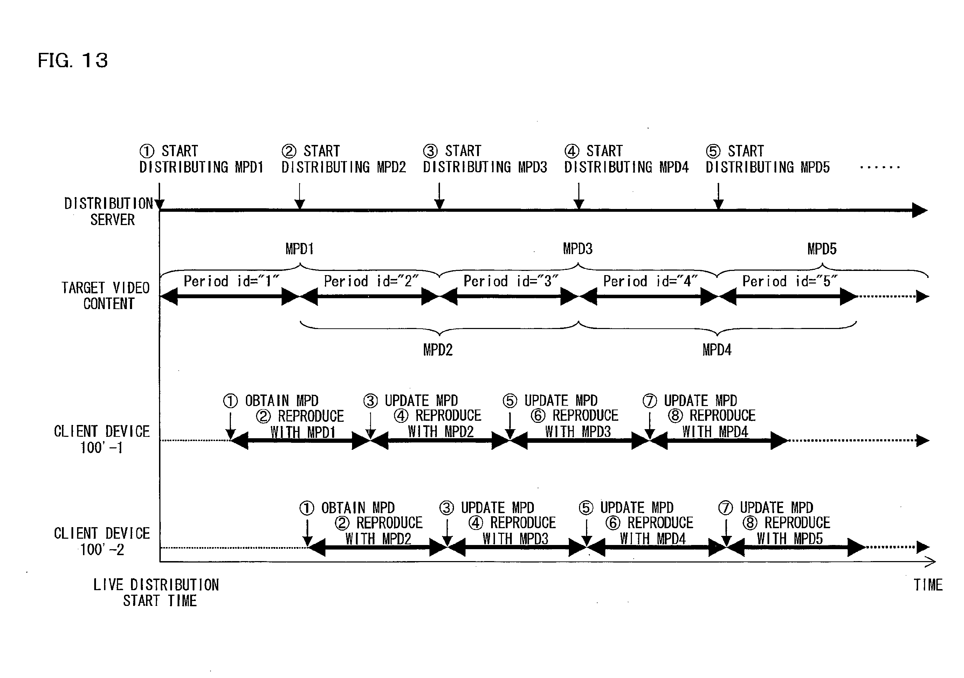

According to the distribution system 1' of Embodiment 2, the client device 100' can carry out a trick reproduction of a target video content from an arbitrary reproduction start point, only in a case where the client device 100' has received information relating to all Periods starting from an initial Period of the target video content. In other words, in a case where the client device 100' of the distribution system 1' receives an instruction on reproducing the target video content after the distribution start time, the client device 100' sometimes cannot carry out a trick reproduction of the target video content from an arbitrary reproduction start point. The following description will discuss a concrete example of such a case, with reference to Fig. 13.

Fig. 13 schematically illustrates (i) a timing at which the distribution server 300' updates MPD data, (ii) Periods of a target video content, (iii) a timing at which a client device 100'-1 obtains MPD data, (iv) a timing at which a client device 100'-2 obtains MPD data, (v) time periods during which the client device 100'-1 reproduces respective Periods of a video, and (vi) time periods during which the client device 100'-2 reproduces respective Periods of the video.

In Fig. 13, a horizontal direction indicates a temporal direction. A left end of Fig. 13 in the horizontal direction indicates a distribution start time of the target video content. In Fig. 13, a timing at which the distribution server 300' updates MPD data is indicated by each of downward arrows on a horizontal line, extending in the horizontal direction from a left end of Fig. 13, indicated by a character string "DISTRIBUTION SERVER". Each of the Periods is indicated by a double-headed arrow on a horizontal line, extending in a horizontal direction from a left end of Fig. 13, indicated by a character string "TARGET VIDEO CONTENT". Note that each of braces above and below the double-headed arrows indicates MPD data containing information relating to corresponding Periods. A timing at which the client device 100'-1 (or 100'-2) obtains MPD data is indicated by each of downward arrows on a horizontal line, extending in the horizontal direction from a left end of Fig. 13, indicated by a character string "CLIENT DEVICE 100'-1 (or 100'-2)", and each of double-headed arrows on the horizontal line indicates a time period during which a corresponding Period of the video is reproduced by the client device 100'-1 (or 100'-2).

Each of the client devices 100'-1 and 100'-2 obtains MPD data in response to a reproduction instruction after a distribution start time of the target video content.

Since the client device 100'-1 has received the reproduction instruction before the distribution server 300' carries out a first update, it can obtain initial MPD data (MPD1). On the other hand, since the client device client device 100'-2 receives the reproduction instruction immediately after the distribution server 300' carries out a first update, it cannot obtain the initial MPD data (MPD1). As such, the client device 100'-2 cannot obtain information relating to a first (initial) Period, and cannot therefore carry out a trick reproduction from a reproduction point belonging to the first Period.

The present invention can be realized as a distribution system which includes the client device 100' of Embodiment 2 and the distribution server 300 of Embodiment 1 so that a trick reproduction can be carried out from an arbitrary reproduction point.

According to the distribution system thus realized, the client device 100' combines an existing MPD with a new MPD, which has just been received from the distribution server 300, by a method similar to that of Embodiment 2 carried out in accordance with the flowchart illustrated in Fig. 12.

As such, in MPD data obtained for the first time by the client device 100' which has accepted an instruction on reproduction of a target video content after a distribution start time, (i) in a case of a Period which comes before a current Period (assumed to be "P-th Period") to which a current time belongs, an external reference Period element is contained and (ii) in a case of a Period which comes after the P-th and subsequent Periods, normal Period element is contained. Moreover, in MPD data, which is obtained by combining an existing MPD and a new MPD which is obtained by the client device 100' for the second time or subsequently, (i) in cases of first through (P-1)th Periods, external reference Period elements are always contained and (ii) in a case of a Period which comes after the P-th and subsequent Periods, normal Period elements are contained.

With the configuration, the client device 100' can carry out a trick reproduction of the target video content from an arbitrary reproduction point, as with Embodiment 1, even in a case where the client device 100' accepts a reproduction instruction of the target video content after the distribution start time. Note that, unlike Embodiment 1, the client device 100' can always start a trick reproduction without referring to a remote object 4, provided that a Period to which a reproduction start point of the trick reproduction belongs is any of the P-th and subsequent Periods.

### (Modification 2)

The present invention can be realized as a distribution system as discussed below, which allows a client device to carry out a trick reproduction of a target video content from an arbitrary reproduction point, even in a case where the client device accepts a reproduction instruction of the target video content after a distribution start time.

Specifically, the present invention can be carried out as a distribution system which includes (i) a client device 100' and (ii) a distribution server which (a) periodically carries out an updating process 1 with respect to MPD data of a target video content and (b) periodically carries out an updating process 2 with respect to MPD data of the target video content.

More specifically, the distribution server concurrently carries out the updating process 1 and the updating process 2. When the distribution server carries out the updating processes 1 and 2 for the first time, the distribution server carries out the updating processes 1 and 2 with respect to respective two pieces of MPD data (initial MPD data) which have identical contents.

In a case where the distribution server receives, from the client device 100', a request for MPD data of a target video content for the first time, the distribution server returns MPD data, which has been updated by the updating process 1, to the client device 100'. In a case where the distribution server receives a request for MPD data of a target video content for the second time or subsequently time, the distribution server returns MPD data, which has been updated by the updating process 2, to the client device 100'.

The distribution server can determine whether it receives a request for MPD data from the client device 100' for the first time or for the second time or subsequently, as follows.

The distribution server can, for example, control the client device 100' to store cookie information containing information (e.g., ID information of the client device 100') with which the client device 100' can be specified. In such a case, the distribution server determines whether or not the distribution server has received the cookie information from the client device 100'. In a case where the distribution server determines that the distribution server has not received the cookie information, the distribution server (i) determines that it has received the request for the first time and (ii) controls the client device 100' to store the cookie information. On the other hand, in a case where the distribution server determines that the distribution server has received the cookie information, the distribution server determines that it has received the request for the second time or subsequently.

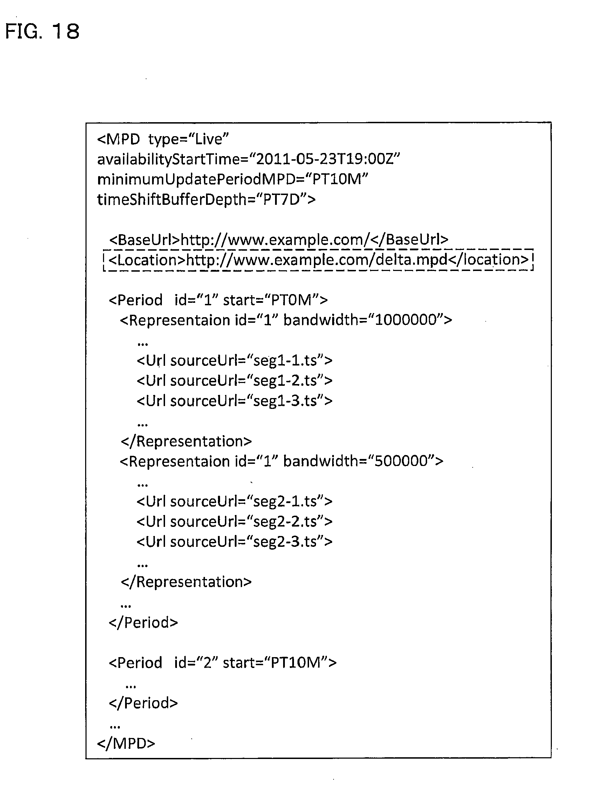

The distribution server can, for example, notify the client device 100' of (i) URL information (URL 1) of MPD data updated by the updating process 1 and (ii) URL information (URL 2) of MPD data updated by the updating process 2. In this case, The URLs 1 and 2 should be different from each other. It is possible for the URLs 1 and 2 to be different from each other, for example, by (i) causing the URLs 1 and 2 to contain file names of respective two pieces of MPD data or (ii) storing the two pieces of MPD data in respective different folders. In this case, the client device 100' is caused to access (i) the URL 1 when the client device 100' obtains MPD data of the target video content for the first time or (ii) the URL 2 when the client device 100' obtains MPD data of the target video content for the second time or subsequently. Note that, it is possible to employ a configuration in which (i) the URL 1 is notified to the client device 100' in advance and (ii) the URL 2 is described as an element value of an element "Location" (e.g., a dotted part in MPD data exemplified in Fig. 18) contained in MPD data obtained by accessing the URL 1.

According to the distribution system above described, the client device 100' can obtain latest MPD data, with which a trick reproduction can be carried out from an arbitrary reproduction point, by carrying out the combination process of the step S64 each time the client device 100' receives MPD data from the distribution server.

### (Additional Remarks 1)

According to the embodiments, the distribution server distributes both (i) MPD data relating to a target video content and (ii) the target video content itself. Note, however, that the MPD data and the target video content can be distributed by respective different distribution servers. Moreover, according to the embodiments, the distribution server, which distributes MPD data, also updates the MPD data. Note, however, that the distribution of MPD data and the updating of the MPD data can be carried out by respective different distribution servers. Also note that a server (generating device), which updates MPD data, does not need to have a communication function. For example , MPD data, which has been updated on the server by a person in charge in a distribution service provider, can be manually transferred to a distribution server via a removable storage medium. Alternatively, after manually transferring the MPD data to a device having a communication function, it is then possible to upload the distribution server with transferred MPD data.

### (Additional Remarks 2)

The metadata generating section 320 updates existing MPD data with MPD data, which does not contain an attribute "minimumUpdatePeriodMPD", after an end time of distributing a target video content has been fixed. Then, the metadata generating section 320 can end or continue periodical updating of MPD data. In Embodiment 1, the metadata generating section 320 generates a different XML file for each past Period. However, the metadata generating section 320 can generate a single XML file which contains URLs (i.e., pieces of time-division data constituting one (1) time-division data group) of respective all MSs belonging to past Periods.

### (Additional Remarks 3)

As above described, the generating device of the present invention is a generating device for repeatedly generating metadata during a live distribution of content data, the metadata (i) relating to the content data which is subjected to a live-distribution while being subjected to time-division to have a plurality of pieces of time-division data and (ii) containing meta information for specifying a location of a piece of time-division data to be obtained by a reproducing device which carries out a live reproduction, the generating device including: first generating means for generating first metadata containing first resource location specifiers indicative of locations of respective pieces of time-division data of which each of at least one time-division data group, distributed during a certain time period in the past, is made up; and second generating means for generating second metadata containing, as the meta information, (i) a second resource location specifier indicative of a location of first metadata containing first resource location specifiers indicative of locations of respective first pieces of time-division data, which were distributed during the certain time period in the past, out of the plurality of pieces of time-division data and (ii) a third resource location specifier indicative of a location of second time-division data out of the plurality of pieces of time-division data, which second time-division data is time-division data other than the first pieces of time-division data. Here, the second generating means can generate (i) second metadata by editing second metadata generated in the past or (ii) second metadata independent from such second metadata generated in the past.

According to the configuration, the second metadata generated by the generating device of the present invention contains a third resource location specifier indicative of a location of time-division data which is currently distributed. Moreover, the second metadata contains (i) third resource location specifiers indicative of locations of the respective plurality of pieces of time-division data distributed in the past or (ii) a second resource location specifier indicative of a location of first metadata containing first resource location specifiers indicative of the locations of the respective pieces of time-division data. Then, the reproducing device which has obtained the second metadata can specify a location of arbitrary time-division data which is currently distributed or was distributed in the past.

Therefore, the generating device of the present invention generates second metadata which allows the reproducing device, which is carrying out a live reproduction of a live content, to carry out a trick reproduction from an arbitrary time point.

In general, it is a matter of course that a data size of a second resource location specifier is smaller than a sum of data sizes of first resource location specifiers contained in first metadata whose location is specified by the second resource location specifier. Therefore, the data size of the second metadata becomes smaller than that of metadata generated by a conventional device, which metadata contains resource location specifiers of respective pieces of time-division data which are distributed currently or in the past. Moreover, in a case where a reproducing device of the present invention does not carry out a trick reproduction, the reproducing device does not obtain time-division data distributed in the past. Therefore, the reproducing device does not obtain first metadata in such a case.

According to the configuration, the reproducing device, which does not carry out a trick reproduction, can achieve data distribution efficiency better than that of the conventional device.

With the configuration, the generating device of the present invention can generate metadata which (i) relates to a content data live distributed, (ii) enables the reproducing device to carry out a trick reproduction of a live content from an arbitrary reproduction point, and (iii) achieves distribution efficiency better than that of a conventional technique.

As above described, the generating method of the present invention is a method for repeatedly generating metadata during a live distribution of content data, the metadata (i) relating to the content data which is subjected to a live-distribution while being subjected to time-division to have a plurality of pieces of time-division data and (ii) containing meta information for specifying a location of a piece of time-division data to be obtained by a reproducing device which carries out a live reproduction, the method including the steps of: generating first metadata containing first resource location specifiers indicative of locations of respective pieces of time-division data of which each of at least one time-division data group, distributed during a certain time period in the past, is made up; and generating second metadata containing, as the meta information, (i) a second resource location specifier indicative of a location of first metadata containing first resource location specifiers indicative of locations of respective first pieces of time-division data, which were distributed during the certain time period in the past, out of the plurality of pieces of time-division data and (ii) a third resource location specifier indicative of a location of second time-division data out of the plurality of pieces of time-division data, which second time-division data is time-division data other than the first pieces of time-division data.

According to the configuration, the generating method of the present invention brings about an effect similar to that of the generating device of the present invention.

It is preferable that data formats of the metadata and the media segment used in the live distribution conforms to a DASH (Dynamic Adaptive Streaming over HTTP) standard, each of the plurality of pieces of time-division data is a media segment conforming to the DASH standard; the first metadata is a remote object conforming to the DASH standard; the second metadata is MPD data which relates to the content data and conforms to the DASH standard; each of the first resource location specifiers and the third resource location specifiers is a URL indicative of a location of a media segment; and the second resource location specifier is a URL indicative of a location of the remote object. Moreover, it is preferable that the present invention is realized as a distribution server which (i) serves also as the generating device and (ii) distributes, to the reproducing device, the content data and the metadata which relates to the content data.

In the generating device of the present invention, it is preferable that a distribution end time, at which a distribution of the content data ends, is not fixed at a distribution start time at which the distribution starts; and in a case where the second generating means generates the second metadata after the distribution end time is fixed, the second metadata being metadata which contains meta information of all the plurality of pieces of time-division data distributed during a time period from the distribution start time to the distribution end time.

According to the configuration, the generating device of the present invention can generate metadata which allows the reproducing device to reproduce content data to the end, whose distribution end time is not fixed at the distribution start time.

In the generating device of the present invention, it is preferable that the certain time period in the past is an entire time period in the past which comes before a certain time period including a time point at which the second generating means generates the second metadata.

According to the configuration, the second metadata, which is repeatedly generated by the generating device of the present invention, contains first resource location specifiers indicative of locations of only respective pieces of time-division data which are distributed during the certain time period including the time point at which the second metadata is generated. In other words, a data size of the second metadata, which is generated by the generating device of the present invention, is not increased significantly.

Therefore, the generating device of the present invention brings about an effect of generating metadata which achieves better distribution efficiency.

As above described, the reproducing device of the present invention is a reproducing device for reproducing content data which is subjected to a live-distribution by a distribution server while being subjected to time-division to have a plurality of pieces of time-division data, the reproducing device including: first obtaining means for obtaining first metadata containing first resource location specifiers indicative of locations of respective pieces of time-division data of which each of at least one time-division data group, corresponding to a certain time period, is made up; second obtaining means for obtaining second metadata containing (i) a second resource location specifier indicative of a location of the first metadata and (ii) a third resource location specifier indicative of a location of a piece of time-division data whose location is not indicated by the first meta data; and reproducing means for (i) sequentially obtaining the plurality of pieces of time-division data from the distribution server based on the second metadata and (ii) reproducing obtained plurality of pieces of time-division data, in a case where the second metadata does not contain a resource location specifier indicative of a location of a piece of time-division data to be reproduced, the reproducing means obtaining first metadata based on a second resource location specifier.

According to the configuration, the first metadata and the second metadata obtained by the reproducing device of the present invention are identical with respective of the first metadata and the second metadata generated by the generating device of the present invention. Moreover, the reproducing device can obtain time-division data, which is to be obtained for reproduction at the time point at which the reproducing device accepts an instruction on live distribution, with reference to a third resource location specifier. Moreover, the reproducing device can obtain time-division data, which is to be obtained for reproduction at the time point at which the reproducing device accepts an instruction on trick reproduction, with reference to (i) a first resource location specifier and a second resource location specifier or (ii) a third resource location specifier.

Therefore, the reproducing device of the present invention can reproduce a live-distributed content based on metadata generated by the generating device of the present invention.

In the reproducing device of the present invention, it is preferable that the second obtaining means periodically obtains the second metadata.

As above described, the reproducing device of the present invention is a reproducing device for reproducing content data which is subjected to a live-distribution by a distribution server while being subjected to time-division to have a plurality of pieces of time-division data, the reproducing device including: obtaining means for repeatedly obtaining metadata which contains resource location specifiers indicative of locations of only respective pieces of time-division data which (i) include at least pieces of time-division data to be obtained by the reproducing device so as to carry out a live reproduction of the content data and (ii) are distributed during a certain time period; generating means for generating new metadata from the metadata each time the obtaining means obtains the metadata; and reproducing means for (i) sequentially obtaining the only respective pieces of time-division data from the distribution server based on a latest piece of the new metadata generated by the generating means and (ii) reproducing the only respective pieces of time-division data thus obtained, the new metadata being metadata which contains all resource location specifiers contained in at least one of (i) the latest metadata generated by the generating means and (ii) the new metadata obtained by the obtaining means.

According to the configuration, the reproducing device of the present invention generates new metadata which contains all resource location specifiers contained in metadata obtained in the past.

Therefore, in a case where the reproducing device of the present invention starts reproducing of a content data from the distribution start time, the reproducing device generates metadata which contains all resource location specifiers indicative of locations of respective all pieces of time-division data, which includes time-division data currently distributed and pieces of time-division data distributed in the past. This makes it possible to carry out, based on the metadata, a live distribution of a live content and a trick reproduction from an arbitrary reproduction point.

The metadata, which is obtained by the reproducing device of the present invention, contains resource location specifiers indicative of locations of only respective pieces of time-division data which (i) include at least pieces of time-division data to be obtained by the reproducing device so as to carry out a live reproduction and (ii) are distributed during a certain time period.

Therefore, the reproducing device of the present invention can obtain metadata more efficiently than a conventional technique, which metadata is to be obtained for carrying out a live distribution of a live content and a trick reproduction from an arbitrary reproduction point.

As above described, the reproduction method of the present invention is a method for reproducing content data which is subjected to a live-distribution by a distribution server while being subjected to time-division to have a plurality of pieces of time-division data, the method including the steps of: (a) repeatedly obtaining metadata which contains resource location specifiers indicative of locations of only respective pieces of time-division data which (i) include at least pieces of time-division data to be obtained by the reproducing device so as to carry out a live reproduction of the content data and (ii) are distributed during a certain time period; (b) generating new metadata from the metadata each time the metadata is obtained in the step (a); and (c) sequentially obtaining the only respective pieces of time-division data from the distribution server based on a latest piece of the new metadata generated in the step (b), and reproducing the only respective pieces of time-division data thus obtained, the new metadata being metadata which contains all resource location specifiers contained in at least one of (i) the latest metadata generated in the step (b) and (ii) the new metadata obtained in the step (a).

According to the configuration, the reproducing method of the present invention brings about an effect similar to that of the reproducing device of the present invention.

Note that it is preferable that each of the pieces of time-division data used in the live distribution is a media segment conforming to a DASH (Dynamic Adaptive Streaming over HTTP) standard.

The present invention encompasses a reproducing system including the generating device and the reproducing device of the present invention.

The present invention encompasses (i) a program for causing a computer to operate as the generating device or the reproducing device of the present invention, the program causing the computer to serve as the means of the generating device or the reproducing device and (ii) a computer-readable storage medium storing such a program.

The present invention encompasses a data structure of metadata which (i) relates to the content data which is subjected to a live-distribution while being subjected to time-division to have a plurality of pieces of time-division data and (ii) contains meta information for specifying a location of a piece of time-division data to be obtained by a reproducing device which carries out a live reproduction, wherein: the metadata contains a piece of meta information for specifying a location of a time-division data group corresponding to a predetermined time period; the piece of meta information has a data structure which is selected from a first data structure and a second data structure in accordance with time which has elapsed since a start of a live distribution of the content data, the first data structure containing a second resource location specifier indicative of a location of metadata containing first resource location specifiers indicative of locations of respective pieces of time-division data constituting the time-division data group, the second data structure containing third resource location specifiers indicative of locations of respective pieces of time-division data constituting the time-division data group.

### (Program and Storage Medium)

Each block of the client device 100 (100') and the distribution server 300 (300') can be configured by hardware with the use of a logic circuit formed on an integrated circuit (IC chip) or by software with the use of CPU (Central Processing Unit).

In the case where each block of the client device 100 (100') and the distribution server 300 (300') is configured by software, each of the client device 100 (100') and the distribution server 300 (300') includes a CPU, a ROM (Read Only Memory), a RAM (Random Access Memory), and a storage device (storage medium) such as a memory. The CPU executes instructions of programs for realizing the functions of the respective above devices. In the ROM, the programs are stored. Into the RAM, the programs are loaded. In the storage device, the programs and various data are stored. The objective of the present invention can also be achieved, by (i) supplying a storage medium, in which program codes (executable programs, intermediate code programs, source programs) of programs for controlling the client device 100 (100') and the distribution server 300 (300'), each being configured by software for realizing the functions, are stored so that a computer can read them, to the above devices, and then (ii) causing the computer (or CPU or MPU) to read and execute the program codes stored in the storage medium.

The storage medium can be, for example, a tape, such as a magnetic tape or a cassette tape; a disk including (i) a magnetic disk such as a floppy (Registered Trademark) disk or a hard disk and (ii) an optical disk such as CD-ROM, MO, MD, DVD, or CD-R; a card such as an IC card (memory card) or an optical card; a semiconductor memory such as a mask ROM, EPROM, EEPROM (Registered Trademark), or flash ROM; or a logic circuit such as PLD (Programmable Logic Device) or FPGA (Field Programmable Gate Array).

Alternatively, the program codes can be supplied to the client device 100 (100') and the distribution server 300 (300') via a communications network. The communications network is not limited to a specific one, provided that the program codes can be transferred via the communications network. The communications network can be, for example, the Internet, an intranet, extranet, LAN, ISDN, VAN, CATV communications network, virtual private network, telephone line network, mobile communications network, or satellite communications network. The transfer medium which constitutes the communications network is not limited to a specific configuration or a specific type, provided that the program codes can be transferred via the transfer medium. The transfer medium can be, for example, wired line such as IEEE 1394, USB, electric power line, cable TV line, telephone line, or ADSL (Asymmetric Digital Subscriber Line) line; or wireless such as infrared radiation (IrDA, remote control), Bluetooth (Registered Trademark), IEEE 802.11 wireless, HDR (High Data Rate), NFC (Near Field Communication), DLNA (Digital Living Network Alliance), mobile telephone network, satellite line, or terrestrial digital network.

Note that the foregoing embodiments are disclosed as merely examples in terms of all points, and therefore should not be considered to limit the present invention. The scope of the present invention is intended to encompass not only the features described above but also all variations within the scope of the claims and equivalents of the claims.

### Industrial Applicability

The reproducing device and the generating device of the present invention is widely applicable to systems such as a content distribution system.

### Reference Signs List

5a through 5e: MPD data
100, 100': Client device (reproducing device)
110, 110': Streaming control section (first obtaining means, second obtaining means, obtaining means, generating means)
120: Reproducing section (reproducing means)
130: Storing section
140: Network I/F
150: Display section
160: Operation section
300, 300': Distribution server (generating device)
310: Distributing section
320, 320': Metadata generating section (first generating means, second generating means)
330: Parameter control section
400: Network storage server (NAS)

## Claims

1. A generating device for repeatedly generating metadata during a live distribution of content data, the metadata (i) relating to the content data which is subjected to a live-distribution while being subjected to time-division to have a plurality of pieces of time-division data and (ii) containing meta information for specifying a location of a piece of time-division data to be obtained by a reproducing device which carries out a live reproduction, said generating device comprising:
first generating means for generating first metadata containing first resource location specifiers indicative of locations of respective pieces of time-division data of which each of at least one time-division data group, distributed during a certain time period in the past, is made up; and
second generating means for generating second metadata containing, as the meta information, (i) a second resource location specifier indicative of a location of first metadata containing first resource location specifiers indicative of locations of respective first pieces of time-division data, which were distributed during the certain time period in the past, out of the plurality of pieces of time-division data and (ii) a third resource location specifier indicative of a location of second time-division data out of the plurality of pieces of time-division data, which second time-division data is time-division data other than the first pieces of time-division data.

2. The generating device as set forth in claim 1, wherein:
a distribution end time, at which a distribution of the content data ends, is not fixed at a distribution start time at which the distribution starts; and
in a case where the second generating means generates the second metadata after the distribution end time is fixed, the second metadata being metadata which contains meta information of all the plurality of pieces of time-division data distributed during a time period from the distribution start time to the distribution end time.

3. The generating device as set forth in claim 2, wherein:
the certain time period in the past is an entire time period in the past which comes before a certain time period including a time point at which the second generating means generates the second metadata.

4. The generating device as set forth in any one of claims 1 through 3, wherein:
each of the plurality of pieces of time-division data is a media segment conforming to a DASH (Dynamic Adaptive Streaming over HTTP) standard;
the first metadata is a remote object conforming to the DASH standard;
the second metadata is MPD data which relates to the content data and conforms to the DASH standard;
each of the first resource location specifiers and the third resource location specifiers is a URL indicative of a location of a media segment; and
the second resource location specifier is a URL indicative of a location of the remote object.

5. A distribution server serving also as a generating device recited in any one of claims 1 through 4,
said distribution server distributing, to a reproducing device, the content data and the metadata which relates to the content data.

6. A reproducing device for reproducing content data which is subjected to a live-distribution by a distribution server while being subjected to time-division to have a plurality of pieces of time-division data,
said reproducing device comprising:
first obtaining means for obtaining first metadata containing first resource location specifiers indicative of locations of respective pieces of time-division data of which each of at least one time-division data group, corresponding to a certain time period, is made up;
second obtaining means for obtaining second metadata containing (i) a second resource location specifier indicative of a location of the first metadata and (ii) a third resource location specifier indicative of a location of a piece of time-division data whose location is not indicated by the first meta data; and
reproducing means for (i) sequentially obtaining the plurality of pieces of time-division data from the distribution server based on the second metadata and (ii) reproducing obtained plurality of pieces of time-division data,
in a case where the second metadata does not contain a resource location specifier indicative of a location of a piece of time-division data to be reproduced, the reproducing means obtaining first metadata based on a second resource location specifier.

7. The reproducing device as set forth in claim 6, wherein:
the second obtaining means periodically obtains the second metadata.

8. A reproducing device for reproducing content data which is subjected to a live-distribution by a distribution server while being subjected to time-division to have a plurality of pieces of time-division data,
said reproducing device comprising:
obtaining means for repeatedly obtaining metadata which contains resource location specifiers indicative of locations of only respective pieces of time-division data which (i) include at least pieces of time-division data to be obtained by said reproducing device so as to carry out a live reproduction of the content data and (ii) are distributed during a certain time period;
generating means for generating new metadata from the metadata each time the obtaining means obtains the metadata; and
reproducing means for (i) sequentially obtaining the only respective pieces of time-division data from the distribution server based on a latest piece of the new metadata generated by the generating means and (ii) reproducing the only respective pieces of time-division data thus obtained,
the new metadata being metadata which contains all resource location specifiers contained in at least one of (i) the latest metadata generated by the generating means and (ii) the new metadata obtained by the obtaining means.

9. The reproducing device as set forth in any one of claims 6 through 8, wherein:
each of the pieces of time-division data is a media segment conforming to a DASH (Dynamic Adaptive Streaming over HTTP) standard.

10. A method for repeatedly generating metadata during a live distribution of content data, the metadata (i) relating to the content data which is subjected to a live-distribution while being subjected to time-division to have a plurality of pieces of time-division data and (ii) containing meta information for specifying a location of a piece of time-division data to be obtained by a reproducing device which carries out a live reproduction,
said method comprising the steps of:
generating first metadata containing first resource location specifiers indicative of locations of respective pieces of time-division data of which each of at least one time-division data group, distributed during a certain time period in the past, is made up; and
generating second metadata containing, as the meta information, (i) a second resource location specifier indicative of a location of first metadata containing first resource location specifiers indicative of locations of respective first pieces of time-division data, which were distributed during the certain time period in the past, out of the plurality of pieces of time-division data and (ii) a third resource location specifier indicative of a location of second time-division data out of the plurality of pieces of time-division data, which second time-division data is time-division data other than the first pieces of time-division data.

11. A method for reproducing content data which is subjected to a live-distribution by a distribution server while being subjected to time-division to have a plurality of pieces of time-division data,
said method comprising the steps of:
(a) repeatedly obtaining metadata which contains resource location specifiers indicative of locations of only respective pieces of time-division data which (i) include at least pieces of time-division data to be obtained by said reproducing device so as to carry out a live reproduction of the content data and (ii) are distributed during a certain time period;
(b) generating new metadata from the metadata each time the metadata is obtained in the step (a); and
(c) sequentially obtaining the only respective pieces of time-division data from the distribution server based on a latest piece of the new metadata generated in the step (b), and reproducing the only respective pieces of time-division data thus obtained,
the new metadata being metadata which contains all resource location specifiers contained in at least one of (i) the latest metadata generated in the step (b) and (ii) the new metadata obtained in the step (a).

12. A reproducing system comprising:
a distribution server recited in claim 5; and
a reproducing device recited in claim 6.

13. A generating program for causing a computer to operate as a generating device recited in any one of claims 1 through 4,
said generating program causing the computer to serve as the means of the generating device.

14. A reproducing program for causing a computer to operate as a reproducing device recited in any one of claims 6 through 9,
said reproducing program causing the computer to serve as the means of the reproducing device.

15. A computer-readable storage medium storing at least one of a generating program recited in claim 13 and a reproducing program recited in claim 14.

16. A data structure of metadata which (i) relates to the content data which is subjected to a live-distribution while being subjected to time-division to have a plurality of pieces of time-division data and (ii) contains meta information for specifying a location of a piece of time-division data to be obtained by a reproducing device which carries out a live reproduction, wherein:
the metadata contains a piece of meta information for specifying a location of a time-division data group corresponding to a predetermined time period;
the piece of meta information has a data structure which is selected from a first data structure and a second data structure in accordance with time which has elapsed since a start of a live distribution of the content data,
the first data structure containing a second resource location specifier indicative of a location of metadata containing first resource location specifiers indicative of locations of respective pieces of time-division data constituting the time-division data group,
the second data structure containing third resource location specifiers indicative of locations of respective pieces of time-division data constituting the time-division data group.
